# EUROPEAN PATENT APPLICATION

(11) **EP 4 712 615 A1**
(43) Date of publication of application: **18.03.2026**
(21) Application number: 24806441.2
(22) Date of filing: 09.05.2024
(51) Int. Cl.: H04W 72/04

(54) **METHOD AND APPARATUS USED IN NODE FOR WIRELESS COMMUNICATION**

(30) Priority: 12.05.2023 CN 202310541132
(71) Applicant: Apogee Networks, LLC, Plano, TX 75024 (US)
(72) Inventor: HU, Yang, Shanghai 201206 (CN); ZHANG, Xiaobo, Shanghai 201206 (CN)
(74) Representative: Gunzelmann, Rainer
(86) International application number: PCT/CN2024/091893
(87) International publication number: WO 2024/235089

(57) **Abstract**

Disclosed in the present application are a method and apparatus used in a node for wireless communication. The method comprises: a first receiver receiving a plurality of pieces of signaling; and the first receiver receiving and decoding a plurality of PDSCHs, wherein the plurality of pieces of signaling respectively schedule the plurality of PDSCHs, and the plurality of PDSCHs comprise a unicast PDSCH and a multicast PDSCH; and whether the total number of frequency-domain resources occupied by the plurality of PDSCHs can be greater than a first upper limit is related to whether the plurality of PDSCHs are overlapped in a time domain, and the first upper limit is a positive integer greater than 1.

## Description

### Technical Field

The present application relates to a transmission method and apparatus in a wireless communication system, in particular to a transmission method and apparatus for wireless signals in a wireless communication system supporting a cellular network.

### Background Art

In a wireless communication system, the comprehensive use of a plurality of communication modes (comprising unicast and multicast) may effectively improve system efficiency.

### Summary of the Invention

When UE is configured with communication resources for a multicast transmission mode, how to reasonably specify the reception/processing conditions of a plurality of PDSCHs (Physical Downlink Shared Channels) according to UE capabilities is an important problem that needs to be considered to ensure the communication performance of the UE; and the present application discloses a solution for the above problem. The present application may be applicable to a variety of wireless communication scenarios, such as communication scenarios for conventional UE, communication scenarios for RedCap UE (UE with Reduced Capabilities), and communication scenarios for UE with UE capabilities between those of the conventional UE and the RedCap UE, and achieves similar technical effects. In addition, the use of a unified solution for different scenarios (comprising, but not being limited to, the communication scenarios for the conventional UE, the communication scenarios for the RedCap UE, and the communication scenarios for the UE with UE capabilities between those of the conventional UE and the RedCap UE) also helps to reduce hardware complexity and costs, or improve performance. In the absence of conflicts, embodiments and features in the embodiments in any node of the present application can be applied to any other node. In the absence of conflicts, embodiments and features in the embodiments of the present application can be arbitrarily combined with each other.

As one embodiment, the interpretation of the terminologies in the present application refers to the definition of the specification protocol TS36 series of 3GPP.

As one embodiment, the interpretation of the terminologies in the present application refers to definitions of TS38 series of the specification protocol of 3GPP.

As one embodiment, the interpretation of the terminologies in the present application refers to definitions of TS37 series of the specification protocol of 3GPP.

As one embodiment, the interpretation of the terminologies in the present application refers to definitions of a specification protocol of the IEEE (Institute of Electrical and Electronics Engineers).

The present application discloses a method used in a first node for wireless communication, characterized by comprising:
receiving a plurality of pieces of signaling; and
receiving and decoding a plurality of PDSCHs, the plurality of pieces of signaling respectively scheduling the plurality of PDSCHs, and the plurality of PDSCHs comprising a unicast PDSCH and a multicast PDSCH,
wherein whether a total number of frequency-domain resources occupied by the plurality of PDSCHs can be greater than a first upper limit is related to whether the plurality of PDSCHs are overlapped in a time domain, and the first upper limit is a positive integer greater than 1.

As one embodiment, the problems to be solved by the present application comprise: what is the relationship between a total number of frequency-domain resources occupied by the plurality of PDSCHs comprising a unicast PDSCH and a multicast PDSCH and whether the plurality of PDSCHs are overlapped in a time domain.

As one embodiment, the problems to be solved by the present application comprise: how to perform a system design to ensure good compatibility between UE capabilities and applications of a plurality of communication modes (comprising unicast and multicast).

As one embodiment, the problems to be solved by the present application comprise: how to optimize the use of frequency-domain resources within a capability range of the first node.

As one embodiment, the problems to be solved by the present application comprise: how to improve system efficiency.

As one embodiment, the problems to be solved by the present application comprise: how to improve robustness of the system.

As one embodiment, the problems to be solved by the present application comprise: how to optimize simultaneous transmission of unicast PDSCHs and multicast PDSCHs for UE with limited processing capabilities.

As one embodiment, the benefits of the above method comprise: helping to improve system efficiency.

As one embodiment, the benefits of the above method comprise: helping to improve use efficiency of frequency-domain resources within a capability range of the first node.

As one embodiment, the benefits of the above method comprise: helping to achieve: the full use of the UE capabilities to support the reception and decoding of unicast PDSCHs and multicast PDSCHs that are overlapped in a time domain on the premise of not exceeding the UE capabilities.

As one embodiment, the benefits of the above method comprise: helping to appropriately apply a plurality of communication modes within a UE capability range corresponding to the first node, thereby improving communication performance.

As one embodiment, the communication modes in the present application comprise: unicast and multicast.

As one embodiment, the benefits of the above method comprise: the scheme is relatively simple and easy to implement, and has good compatibility for the 3GPP protocols.

According to one aspect of the present application, the above method is characterized in that,
when the plurality of PDSCHs are overlapped in a time domain, the total number of frequency-domain resources occupied by the plurality of PDSCHs cannot be greater than the first upper limit.

As one embodiment, the benefits of the above method comprise: avoiding the reception of the plurality of PDSCHs that are overlapped in a time domain exceeding the processing capability of UE for a frequency domain, thereby improving robustness of the system.

As one embodiment, the benefits of the above method comprise: helping to avoid potential erroneous scheduling for unicast PDSCHs and multicast PDSCHs, thereby improving robustness of the system.

As one embodiment, the benefits of the above method comprise: helping UE with limited frequency-domain processing capabilities to obtain the gain of simultaneous transmission of unicast PDSCHs and multicast PDSCHs in a time domain within their own UE capability ranges.

As one embodiment, the benefits of the above method comprise: avoiding the need for the first node to determine different processing strategies according to whether the total number of frequency-domain resources occupied by the plurality of PDSCHs is greater than the first upper limit when the plurality of PDSCHs are overlapped in a time domain, thereby reducing processing complexity of the first node.

As one embodiment, the benefits of the above method comprise: helping to overcome the problem of being unable to feed back HARQ-ACK information for unicast PDSCHs and multicast PDSCHs in a timely manner due to limited UE processing capabilities, and helping to improve transmission reliability.

According to one aspect of the present application, the above method is characterized in that,
when the plurality of PDSCHs are not overlapped in a time domain, the total number of frequency-domain resources occupied by the plurality of PDSCHs can be greater than the first upper limit.

As one embodiment, the benefits of the above method comprise: helping to achieve the full use of frequency-domain resources within a capability range of the first node.

According to one aspect of the present application, the above method is characterized in that,
the first upper limit is equal to a maximum number of PRBs that may be occupied by one unicast PDSCH.

According to one aspect of the present application, the above method is characterized in that,
the first upper limit is equal to a maximum number of PRBs that may be occupied by one multicast PDSCH.

According to one aspect of the present application, the above method is characterized in that,
the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

As one embodiment, the benefits of the above method comprise: small scheduling delay.

According to one aspect of the present application, the above method is characterized in that,
the plurality of PDSCHs are 2 PDSCHs.

According to one aspect of the present application, the above method is characterized in that,
the first node is RedCap UE.

As one embodiment, the benefits of the above method comprise: helping to reduce equipment costs.

According to one aspect of the present application, the above method is characterized in that,
the plurality of PDSCHs are not overlapped in a frequency domain.

According to one aspect of the present application, the above method is characterized by comprising:
sending a plurality of HARQ-ACK (Hybrid Automatic Repeat Request Acknowledgement) bits,
wherein the plurality of HARQ-ACK bits comprise at least one HARQ-ACK bit generated for each PDSCH among the plurality of PDSCHs.

As one embodiment, the plurality of HARQ-ACK bits are 2 HARQ-ACK bits.

As one embodiment, the plurality of HARQ-ACK bits are more than 2 HARQ-ACK bits.

As one embodiment, one HARQ-ACK bit among the plurality of HARQ-ACK bits is used for indicating whether at least one transport block in one PDSCH among the plurality of PDSCHs is correctly decoded.

As one embodiment, the plurality of HARQ-ACK bits are sent in the same physical layer channel.

As one embodiment, 2 HARQ-ACK bits among the plurality of HARQ-ACK bits are respectively sent in different physical layer channels.

The present application discloses a method used in a second node for wireless communication, characterized by comprising:
sending a plurality of pieces of signaling; and
sending a plurality of PDSCHs, the plurality of pieces of signaling respectively scheduling the plurality of PDSCHs, and the plurality of PDSCHs comprising a unicast PDSCH and a multicast PDSCH,
wherein whether a total number of frequency-domain resources occupied by the plurality of PDSCHs can be greater than a first upper limit is related to whether the plurality of PDSCHs are overlapped in a time domain, and the first upper limit is a positive integer greater than 1.

According to one aspect of the present application, the above method is characterized in that,
when the plurality of PDSCHs are overlapped in a time domain, the total number of frequency-domain resources occupied by the plurality of PDSCHs cannot be greater than the first upper limit.

According to one aspect of the present application, the above method is characterized in that,
when the plurality of PDSCHs are not overlapped in a time domain, the total number of frequency-domain resources occupied by the plurality of PDSCHs can be greater than the first upper limit.

According to one aspect of the present application, the above method is characterized in that,
the first upper limit is equal to a maximum number of PRBs that may be occupied by one unicast PDSCH.

According to one aspect of the present application, the above method is characterized in that,
the first upper limit is equal to a maximum number of PRBs that may be occupied by one multicast PDSCH.

According to one aspect of the present application, the above method is characterized in that,
the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

According to one aspect of the present application, the above method is characterized in that,
the plurality of PDSCHs are 2 PDSCHs.

According to one aspect of the present application, the above method is characterized in that,
the plurality of PDSCHs are not overlapped in a frequency domain.

According to one aspect of the present application, the above method is characterized by comprising:
receiving a plurality of HARQ-ACK bits,
wherein the plurality of HARQ-ACK bits comprise at least one HARQ-ACK bit generated for each PDSCH among the plurality of PDSCHs.

The present application discloses a first node used for wireless communication, characterized by comprising:
a first receiver receiving a plurality of pieces of signaling; and
the first receiver receiving and decoding a plurality of PDSCHs, the plurality of pieces of signaling respectively scheduling the plurality of PDSCHs, and the plurality of PDSCHs comprising a unicast PDSCH and a multicast PDSCH,
wherein whether a total number of frequency-domain resources occupied by the plurality of PDSCHs can be greater than a first upper limit is related to whether the plurality of PDSCHs are overlapped in a time domain, and the first upper limit is a positive integer greater than 1.

The present application discloses a second node used for wireless communication, characterized by comprising:
a second transmitter sending a plurality of pieces of signaling; and
the second transmitter sending a plurality of PDSCHs, the plurality of pieces of signaling respectively scheduling the plurality of PDSCHs, and the plurality of PDSCHs comprising a unicast PDSCH and a multicast PDSCH,
wherein whether a total number of frequency-domain resources occupied by the plurality of PDSCHs can be greater than a first upper limit is related to whether the plurality of PDSCHs are overlapped in a time domain, and the first upper limit is a positive integer greater than 1.

The present application discloses a method used in a first node for wireless communication, characterized by comprising:
receiving a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH,
wherein whether the first node needs to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

As one embodiment, the problems to be solved in the present application comprise: what is the relationship between whether the first node needs to process the first PDSCH and a total number of frequency-domain resources occupied by the plurality of PDSCHs.

As one embodiment, the problems to be solved by the present application comprise: how to perform a system design to ensure good compatibility between UE capabilities and applications of a plurality of communication modes (comprising unicast and multicast).

As one embodiment, the problems to be solved by the present application comprise: how to optimize the processing for PDSCHs within a capability range of the first node.

As one embodiment, the problems to be solved by the present application comprise: how to improve scheduling/processing flexibility.

As one embodiment, the problems to be solved by the present application comprise: how to improve robustness of the system.

As one embodiment, the problems to be solved by the present application comprise: how to optimize the specification of behaviors for UE with limited processing capabilities in scenarios where unicast PDSCHs and multicast PDSCHs are overlapped in a time domain.

As one embodiment, the benefits of the above method comprise: in scenarios where a multicast transmission mode is enabled, improving scheduling/processing flexibility, and helping to optimize system scheduling or reduce equipment costs.

As one embodiment, the benefits of the above method comprise: helping UE with limited frequency-domain processing capabilities to obtain the gain of simultaneous transmission of unicast PDSCHs and multicast PDSCHs in a time domain within their own UE capability ranges.

As one embodiment, the benefits of the above method comprise: improving flexibility of scheduling on the base station side by specifying the behavior (i.e., whether the first node needs to process the first PDSCH) of the first node.

As one embodiment, the benefits of the above method comprise: helping to fully utilize the UE capabilities to achieve good resource utilization efficiency.

As one embodiment, the benefits of the above method comprise: helping to improve system efficiency.

As one embodiment, the benefits of the above method comprise: having good compatibility for the 3GPP protocols.

According to one aspect of the present application, the above method is characterized in that,
when the total number of frequency-domain resources occupied by the plurality of PDSCHs is greater than the first upper limit, the first node does not need to process the first PDSCH.

As one embodiment, the benefits of the above method comprise: helping to achieve: discarding PDSCHs with lower importance to ensure the reception performance of PDSCHs with higher importance on the premise of ensuring that UE capabilities of the first node are not exceeded, thereby optimizing communication performance.

As one embodiment, the benefits of the above method comprise: helping to overcome the problem of being unable to feed back HARQ-ACK information for unicast PDSCHs and multicast PDSCHs in a timely manner due to limited UE processing capabilities, and helping to improve transmission reliability.

According to one aspect of the present application, the above method is characterized in that,
when the total number of frequency-domain resources occupied by the plurality of PDSCHs is not greater than the first upper limit, the first node processes the first PDSCH.

As one embodiment, the benefits of the above method comprise: helping to fully utilize the UE capabilities to achieve good resource utilization efficiency.

According to one aspect of the present application, the above method is characterized in that,
a second PDSCH is a PDSCH that is other than the first PDSCH in the plurality of PDSCHs and has a communication mode different from a communication mode of the first PDSCH, and the first node processes the second PDSCH.

As one embodiment, the benefits of the above method comprise: helping to improve the resource utilization efficiency.

According to one aspect of the present application, the above method is characterized in that,
the first upper limit is equal to a maximum number of PRBs that may be occupied by one unicast PDSCH.

According to one aspect of the present application, the above method is characterized in that,
the first upper limit is equal to a maximum number of PRBs that may be occupied by one multicast PDSCH.

According to one aspect of the present application, the above method is characterized in that,
the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

As one embodiment, the benefits of the above method comprise: small scheduling delay.

According to one aspect of the present application, the above method is characterized in that,
the plurality of PDSCHs are 2 PDSCHs.

According to one aspect of the present application, the above method is characterized in that,
the first node is RedCap UE.

As one embodiment, the benefits of the above method comprise: helping to reduce equipment costs.

According to one aspect of the present application, the above method is characterized in that,
the plurality of PDSCHs are not overlapped in a frequency domain.

According to one aspect of the present application, the above method is characterized by comprising:
sending at least one HARQ-ACK (Hybrid Automatic Repeat Request Acknowledgement) bit,
wherein the at least one HARQ-ACK bit comprises an HARQ-ACK bit generated for at least one PDSCH among the plurality of PDSCHs.

As one embodiment, the at least one HARQ-ACK bit comprises an HARQ-ACK bit generated for a PDSCH among the plurality of PDSCHs that is processed by the first node.

The present application discloses a method used in a second node for wireless communication, characterized by comprising:
sending a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH,
wherein whether receiving ends of the plurality of pieces of signaling need to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

According to one aspect of the present application, the above method is characterized in that,
when the total number of frequency-domain resources occupied by the plurality of PDSCHs is greater than the first upper limit, the receiving ends of the plurality of pieces of signaling do not need to process the first PDSCH.

According to one aspect of the present application, the above method is characterized in that,
when the total number of frequency-domain resources occupied by the plurality of PDSCHs is not greater than the first upper limit, the receiving ends of the plurality of pieces of signaling process the first PDSCH.

According to one aspect of the present application, the above method is characterized in that,
a second PDSCH is a PDSCH that is other than the first PDSCH in the plurality of PDSCHs and has a communication mode different from a communication mode of the first PDSCH, and the receiving ends of the plurality of pieces of signaling process the second PDSCH.

According to one aspect of the present application, the above method is characterized in that,
the first upper limit is equal to a maximum number of PRBs that may be occupied by one unicast PDSCH.

According to one aspect of the present application, the above method is characterized in that,
the first upper limit is equal to a maximum number of PRBs that may be occupied by one multicast PDSCH.

According to one aspect of the present application, the above method is characterized in that,
the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

According to one aspect of the present application, the above method is characterized in that,
the plurality of PDSCHs are 2 PDSCHs.

According to one aspect of the present application, the above method is characterized in that,
the plurality of PDSCHs are not overlapped in a frequency domain.

According to one aspect of the present application, the above method is characterized by comprising:
receiving at least one HARQ-ACK (Hybrid Automatic Repeat Request Acknowledgement) bit,
wherein the at least one HARQ-ACK bit comprises an HARQ-ACK bit generated for at least one PDSCH among the plurality of PDSCHs.

The present application discloses a first node used for wireless communication, characterized by comprising:
a first receiver receiving a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH,
wherein whether the first node needs to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

According to one aspect of the present application, the above node is characterized in that,
when the total number of frequency-domain resources occupied by the plurality of PDSCHs is greater than the first upper limit, the first node does not need to process the first PDSCH.

According to one aspect of the present application, the above node is characterized in that,
when the total number of frequency-domain resources occupied by the plurality of PDSCHs is not greater than the first upper limit, the first node processes the first PDSCH.

According to one aspect of the present application, the above node is characterized in that,
a second PDSCH is a PDSCH that is other than the first PDSCH in the plurality of PDSCHs and has a communication mode different from a communication mode of the first PDSCH, and the first node processes the second PDSCH.

According to one aspect of the present application, the above node is characterized in that,
the first upper limit is equal to a maximum number of PRBs that may be occupied by one unicast PDSCH.

According to one aspect of the present application, the above node is characterized in that,
the first upper limit is equal to a maximum number of PRBs that may be occupied by one multicast PDSCH.

According to one aspect of the present application, the above node is characterized in that,
the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

According to one aspect of the present application, the above node is characterized in that,
the plurality of PDSCHs are 2 PDSCHs.

According to one aspect of the present application, the above node is characterized in that,
the first node is RedCap UE.

According to one aspect of the present application, the above node is characterized in that,
the plurality of PDSCHs are not overlapped in a frequency domain.

According to one aspect of the present application, the above node is characterized by comprising:
a first transmitter sending at least one HARQ-ACK (Hybrid Automatic Repeat Request Acknowledgement) bit,
wherein the at least one HARQ-ACK bit comprises an HARQ-ACK bit generated for at least one PDSCH among the plurality of PDSCHs.

The present application discloses a second node used for wireless communication, characterized by comprising:
a second transmitter sending a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH,
wherein whether receiving ends of the plurality of pieces of signaling need to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

### Brief Description of the Drawings

Other features, purposes and advantages of the present application will become more apparent by reading the detailed description of the non-limiting embodiments with reference to the following drawings:
FIG. 1 shows a processing flow chart of a first node according to one embodiment of the present application;
FIG. 2 shows a schematic diagram of a network architecture according to one embodiment of the present application;
FIG. 3 shows a schematic diagram of a wireless protocol architecture of a user plane and a control plane according to one embodiment of the present application;
FIG. 4 shows a schematic diagram of a first communication device and a second communication device according to one embodiment of the present application;
FIG. 5 shows a flow chart of signal transmission according to one embodiment of the present application;
FIG. 6 shows a schematic diagram illustrating that a total number of frequency-domain resources occupied by a plurality of PDSCHs cannot be greater than a first upper limit according to one embodiment of the present application;
FIG. 7 shows a processing flow chart of a first node according to one embodiment of the present application;
FIG. 8 shows a schematic diagram illustrating frequency-domain resources occupied by a plurality of PDSCHs according to one embodiment of the present application;
FIG. 9 shows a schematic diagram illustrating frequency-domain resources occupied by a plurality of PDSCHs according to one embodiment of the present application;
FIG. 10 shows a structural block diagram of a processing device in a first node device according to one embodiment of the present application; and
FIG. 11 shows a structural block diagram of a processing device in a second node device according to one embodiment of the present application.

### Detailed Description of Embodiments

The technical solution of the present application will be further described in detail below in conjunction with the accompanying drawings. It should be noted that, in the absence of conflicts, the embodiments and the features in the embodiments of the present application can be arbitrarily combined with each other.

### Embodiment 1

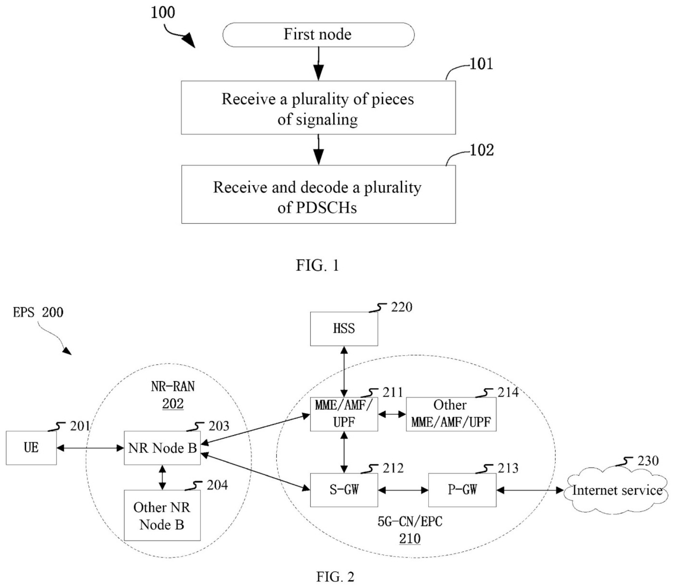

Embodiment 1 illustrates a processing flow chart of a first node according to one embodiment of the present application, as shown in FIG. 1.

In Embodiment 1, the first node in the present application receives a plurality of pieces of signaling in step 101; and receives and decodes a plurality of PDSCHs in step 102.

In Embodiment 1, the plurality of pieces of signaling respectively schedule the plurality of PDSCHs, and the plurality of PDSCHs comprise a unicast PDSCH and a multicast PDSCH; and whether a total number of frequency-domain resources occupied by the plurality of PDSCHs can be greater than a first upper limit is related to whether the plurality of PDSCHs are overlapped in a time domain, and the first upper limit is a positive integer greater than 1.

As one embodiment, the plurality of pieces of signaling are respectively borne by a plurality of PDCCHs (Physical Downlink Control Channels).

As one embodiment, the benefits of the above method comprise: small scheduling delay.

As one embodiment, the plurality of pieces of signaling are respectively a plurality of pieces of DCI (Downlink Control Information).

As one embodiment, the benefits of the above method comprise: small scheduling delay.

As one embodiment, a CRC of one piece of signaling among the plurality of pieces of signaling is scrambled by a C-RNTI, and a CRC of another piece of signaling among the plurality of pieces of signaling is scrambled by a G-RNTI.

As one embodiment, the characteristics of the above method comprise: a C-RNTI is used for scheduling a unicast PDSCH, and a G-RNTI is used for scheduling a multicast PDSCH.

As one embodiment, the benefits of the above method comprise: small scheduling delay.

As one embodiment, a CRC of one piece of signaling among the plurality of pieces of signaling is scrambled by a C-RNTI/CS-RNTI, and a CRC of another piece of signaling among the plurality of pieces of signaling is scrambled by a G-RNTI/G-CS-RNTI.

As one embodiment, the characteristics of the above method comprise: a C-RNTI/CS-RNTI is used for scheduling a unicast PDSCH, and a G-RNTI/G-CS-RNTI is used for scheduling a multicast PDSCH.

As one embodiment, the benefits of the above method comprise: small scheduling delay.

As one embodiment, the plurality of pieces of signaling are all in a DCI format; a CRC of one piece of signaling among the plurality of pieces of signaling is scrambled by a C-RNTI/CS-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI/G-CS-RNTI, and the another piece of signaling among the plurality of pieces of signaling is used for scheduling one multicast PDSCH in the plurality of PDSCHs.

As one embodiment, the benefits of the above method comprise: small scheduling delay.

As one embodiment, the plurality of pieces of signaling comprise NAS (Network Attached Storage) signaling.

As one embodiment, the plurality of pieces of signaling comprise RRC signaling.

As one embodiment, the behavior of receiving the plurality of PDSCHs comprises: receiving a signal in each PDSCH among the plurality of PDSCHs.

As one embodiment, the behavior of receiving the plurality of PDSCHs comprises: performing signal detection in each PDSCH among the plurality of PDSCHs.

As one embodiment, the behavior of receiving the plurality of PDSCHs comprises: executing processing on signals received in the plurality of PDSCHs.

As one embodiment, the behavior of decoding the plurality of PDSCHs comprises: decoding a transport block transmitted in the plurality of PDSCHs.

As one embodiment, the behavior of decoding the plurality of PDSCHs comprises: executing operations comprising channel decoding on signals received in each PDSCH among the plurality of PDSCHs.

As one embodiment, the behavior of decoding the plurality of PDSCHs comprises: decoding data information transmitted in the plurality of PDSCHs.

As one embodiment, one unicast PDSCH is a PDSCH for point-to-point transmission.

As one embodiment, one multicast PDSCH is a PDSCH for point-to-multipoint transmission.

As one embodiment, one unicast PDSCH is a PDSCH scheduled by a unicast DCI format, and the unicast DCI format has a CRC (Cyclic Redundancy Check) that is scrambled by a C-RNTI or a CS-RNTI or an MCS-C-RNTI.

As one embodiment, one multicast PDSCH is a PDSCH scheduled by a multicast DCI format, and the multicast DCI format has a CRC that is scrambled by a G-RNTI or a G-CS-RNTI.

As one embodiment, the plurality of pieces of signaling are 2 pieces of signaling, and the plurality of PDSCHs are 2 PDSCHs.

As one embodiment, the benefits of the above method comprise: simplifying complexity of the system design.

As one embodiment, the plurality of pieces of signaling are more than 2 pieces of signaling, and the plurality of PDSCHs are more than 2 PDSCHs.

As one embodiment, the plurality of pieces of signaling and the plurality of PDSCHs are in one-to-one correspondence.

As one embodiment, the plurality of pieces of signaling are 2 pieces of signaling.

As one embodiment, the plurality of PDSCHs are: one unicast PDSCH and one multicast PDSCH.

As one embodiment, any 2 PDSCHs among the plurality of PDSCHs do not occupy any same PRBs.

As one embodiment, the plurality of PDSCHs are not overlapped in a frequency domain.

As one embodiment, the benefits of the above method comprise: helping to support unicast PDSCHs and multicast PDSCHs with frequency division multiplexing (FDM).

As one embodiment, when the plurality of PDSCHs are overlapped in a time domain, any 2 PDSCHs among the plurality of PDSCHs do not occupy any same PRBs.

As one embodiment, when the plurality of PDSCHs are overlapped in a time domain, the plurality of PDSCHs are not overlapped in a frequency domain.

As one embodiment, the benefits of the above method comprise: helping to support unicast PDSCHs and multicast PDSCHs with frequency division multiplexing (FDM).

As one embodiment, the plurality of PDSCHs are overlapped in a frequency domain.

As one embodiment, the benefits of the above method comprise: helping to support unicast PDSCHs and multicast PDSCHs with space division multiplexing (SDM).

As one embodiment, frequency-domain resources occupied by the plurality of PDSCHs are counted in accordance with RBs (Resource Blocks).

As one embodiment, the total number of frequency-domain resources occupied by the plurality of PDSCHs is: a total number of RBs occupied by the plurality of PDSCHs.

As one embodiment, frequency-domain resources occupied by the plurality of PDSCHs are counted in accordance with PRBs (Physical Resource Blocks).

As one embodiment, the total number of frequency-domain resources occupied by the plurality of PDSCHs is: a total number of PRBs occupied by the plurality of PDSCHs.

As one embodiment, frequency-domain resources occupied by the plurality of PDSCHs are counted in accordance with subcarriers.

As one embodiment, the total number of frequency-domain resources occupied by the plurality of PDSCHs is: a total number of subcarriers occupied by the plurality of PDSCHs.

As one embodiment, each PDSCH among the plurality of PDSCHs occupies consecutive frequency-domain resources in a frequency domain.

As one embodiment, one PDSCH among the plurality of PDSCHs occupies consecutive frequency-domain resources in a frequency domain.

As one embodiment, at least one PDSCH among the plurality of PDSCHs occupies inconsecutive frequency-domain resources in a frequency domain.

As one embodiment, a number of frequency-domain resources occupied by each PDSCH among the plurality of PDSCHs is not greater than the first upper limit.

As one embodiment, the meaning of the expression of "whether a total number of frequency-domain resources occupied by the plurality of PDSCHs can be greater than a first upper limit" is: whether the total number of frequency-domain resources occupied by the plurality of PDSCHs is greater than the first upper limit (an occurrence of this event) is not expected.

As one embodiment, the meaning of the expression of "whether a total number of frequency-domain resources occupied by the plurality of PDSCHs can be greater than a first upper limit" is: whether the total number of frequency-domain resources occupied by the plurality of PDSCHs is greater than the first upper limit (an occurrence of this event) is allowed.

As one embodiment, the meaning of the expression of "whether a total number of frequency-domain resources occupied by the plurality of PDSCHs can be greater than a first upper limit" is: whether the total number of frequency-domain resources occupied by the plurality of PDSCHs is greater than the first upper limit (an occurrence of this event) is within an expected processing range.

As one embodiment, viewed from a time domain, the plurality of PDSCHs are in 5 consecutive slots, and the 5 consecutive slots are configurable; only when the plurality of PDSCHs are not overlapped in the time domain and an interval between a starting time of each PDSCH among the plurality of PDSCHs and an ending time of at least one other PDSCH exceeds a duration occupied by 3.5 slots, the total number of frequency-domain resources occupied by the plurality of PDSCHs can be greater than the first upper limit; otherwise, the total number of frequency-domain resources occupied by the plurality of PDSCHs cannot be greater than the first upper limit.

As one embodiment, viewed from a time domain, the plurality of PDSCHs are in 5 consecutive slots, and the 5 consecutive slots are configurable; only when the plurality of PDSCHs are not overlapped in the time domain, an interval between a starting time of each PDSCH among the plurality of PDSCHs and an ending time of at least one other PDSCH exceeds a duration occupied by 2.5 slots, and the first node is not scheduled for uplink transmission during a duration occupied by the plurality of PDSCHs, the total number of frequency-domain resources occupied by the plurality of PDSCHs can be greater than the first upper limit; otherwise, the total number of frequency-domain resources occupied by the plurality of PDSCHs cannot be greater than the first upper limit.

As one embodiment, viewed from a time domain, the plurality of PDSCHs are in one system frame; only when the plurality of PDSCHs are not overlapped in the time domain, an interval between a starting time of each PDSCH among the plurality of PDSCHs and a starting time of any other PDSCH exceeds 3 slots, and an interval between the starting time of each PDSCH among the plurality of PDSCHs and an ending time of at least one other PDSCH exceeds a duration occupied by 6 slots, the total number of frequency-domain resources occupied by the plurality of PDSCHs can be greater than the first upper limit; otherwise, the total number of frequency-domain resources occupied by the plurality of PDSCHs cannot be greater than the first upper limit.

As one embodiment, viewed from a time domain, the plurality of PDSCHs are in one system frame; only when the plurality of PDSCHs are not overlapped in the time domain, an interval between a starting time of each PDSCH among the plurality of PDSCHs and a starting time of any other PDSCH exceeds 3 slots, and the first node is not scheduled for uplink transmission during a duration occupied by the plurality of PDSCHs, the total number of frequency-domain resources occupied by the plurality of PDSCHs can be greater than the first upper limit; otherwise, the total number of frequency-domain resources occupied by the plurality of PDSCHs cannot be greater than the first upper limit.

As one embodiment, the benefits of the above method comprise: helping to further reduce the requirement for the UE processing capabilities.

As one embodiment, when the plurality of PDSCHs are overlapped in a time domain, the total number of frequency-domain resources occupied by the plurality of PDSCHs cannot be greater than the first upper limit; and when the plurality of PDSCHs are not overlapped in a time domain, the total number of frequency-domain resources occupied by the plurality of PDSCHs can be greater than the first upper limit.

As one embodiment, the definition of the first upper limit is related to UE capabilities.

As one embodiment, the use of the first upper limit is related to UE capabilities.

As one embodiment, the first upper limit is determined based on reporting of the first node.

As one embodiment, the first node reports the first upper limit as UE capability information to a base station.

As one embodiment, based on UE capability information reported by the first node, the first upper limit is configured to the first node.

As one embodiment, the first upper limit is a maximum number of PRBs that may be assigned to unicast PDSCHs for a piece of RedCap UE.

As one embodiment, the first upper limit is predefined for a piece of RedCap UE.

As one embodiment, the first upper limit does not exceed a number of subcarriers included in a bandwidth of 5 MHz.

As one embodiment, the first upper limit does not exceed a number of PRBs included in a bandwidth of 5 MHz.

As one embodiment, frequency-domain resources occupied by the plurality of PDSCHs are counted in accordance with RBs/PRBs, and the first upper limit is 25.

As one embodiment, the benefits of the above method comprise: for a configuration of a 15 kHz SCS (Subcarrier Spacing), on the premise of ensuring that a maximum scheduling bandwidth does not exceed 5 MHz, facilitating UE processing and helping to obtain a higher frequency-domain resource utilization rate.

As one embodiment, the benefits of the above method comprise: helping to reduce processing complexity of the first node.

As one embodiment, the benefits of the above method comprise: helping to support RedCap UE.

As one embodiment, frequency-domain resources occupied by the plurality of PDSCHs are counted in accordance with RBs/PRBs, and the first upper limit is 12.

As one embodiment, the benefits of the above method comprise: for a configuration of a 30 kHz SCS (Subcarrier Spacing), on the premise of ensuring that a maximum scheduling bandwidth does not exceed 5 MHz, facilitating UE processing and helping to obtain a higher frequency-domain resource utilization rate.

As one embodiment, the benefits of the above method comprise: helping to reduce processing complexity of the first node.

As one embodiment, the benefits of the above method comprise: helping to support RedCap UE.

As one embodiment, the first upper limit is used for limiting a number of RBs occupied by unicast PDSCHs.

As one embodiment, the first upper limit is used for limiting a number of PRBs occupied by unicast PDSCHs.

As one embodiment, the first upper limit is used for limiting a number of RBs occupied by multicast PDSCHs.

As one embodiment, the first upper limit is used for limiting a number of PRBs occupied by multicast PDSCHs.

As one embodiment, the first upper limit is equal to a maximum number of RBs that may be occupied by one unicast PDSCH.

As one embodiment, the benefits of the above method comprise: helping to reduce processing complexity of the first node.

As one embodiment, the benefits of the above method comprise: helping to support RedCap UE.

As one embodiment, the first upper limit is equal to a maximum number of PRBs that may be occupied by one unicast PDSCH.

As one embodiment, the benefits of the above method comprise: helping to reduce processing complexity of the first node.

As one embodiment, the benefits of the above method comprise: helping to support RedCap UE.

As one embodiment, for the first node, a number of PRBs occupied by one unicast PDSCH does not exceed the first upper limit.

As one embodiment, the benefits of the above method comprise: helping to reduce processing complexity of the first node.

As one embodiment, the benefits of the above method comprise: helping to support RedCap UE.

As one embodiment, for the first node, a number of RBs occupied by one unicast PDSCH does not exceed the first upper limit.

As one embodiment, the benefits of the above method comprise: helping to reduce processing complexity of the first node.

As one embodiment, the benefits of the above method comprise: helping to support RedCap UE.

As one embodiment, for the first node, a number of PRBs occupied by one multicast PDSCH does not exceed the first upper limit.

As one embodiment, the benefits of the above method comprise: helping to reduce processing complexity of the first node.

As one embodiment, the benefits of the above method comprise: helping to support RedCap UE.

As one embodiment, for the first node, a number of RBs occupied by one multicast PDSCH does not exceed the first upper limit.

As one embodiment, the benefits of the above method comprise: helping to reduce processing complexity of the first node.

As one embodiment, the benefits of the above method comprise: helping to support RedCap UE.

As one embodiment, when there exist at least two PDSCHs among the plurality of PDSCHs that both occupy a first frequency-domain resource, the first frequency-domain resource is counted only once in the determination of the total number of frequency-domain resources occupied by the plurality of PDSCHs.

As one embodiment, when there exist K PDSCHs among the plurality of PDSCHs that all occupy a first frequency-domain resource, the first frequency-domain resource is counted K times in the determination of the total number of frequency-domain resources occupied by the plurality of PDSCHs, and the K is a positive integer.

As one embodiment, the first frequency-domain resource is one RB.

As one embodiment, the first frequency-domain resource is one PRB.

As one embodiment, the first frequency-domain resource is one subcarrier.

As one embodiment, the plurality of PDSCHs are received on a first BWP (Bandwidth Part), and the first upper limit is smaller than a number of RBs/PRBs occupied by the first BWP.

As one embodiment, the benefits of the above method comprise: helping to support UE with limited frequency-domain reception capabilities for PDSCHs.

### Embodiment 2

Embodiment 2 illustrates a schematic diagram of one network architecture according to the present application, as shown in FIG. 2.

FIG. 2 illustrates a diagram of a network architecture 200 of a 5G NR, LTE (Long-Term Evolution) and LTE-A (Long-Term Evolution Advanced) system. The 5G NR or LTE network architecture 200 may be referred to as EPS (Evolved Packet System) 200 or some other suitable terminologies. The EPS 200 may comprise one or more pieces of UE (User Equipment) 201, an NG-RAN (Next Generation Radio Access Network) 202, an EPC (Evolved Packet Core)/5G-CN (5G-Core Network) 210, an HSS (Home Subscriber Server) 220, and an Internet service 230. The EPS may be interconnected with other access networks, but these entities/interfaces are not shown for simplicity. As shown in the figure, the EPS provides packet switching services. However, those skilled in the art will readily appreciate that the various concepts presented throughout the present application may be extended to networks providing circuit switching services or other cellular networks. The NG-RAN comprises an NR Node B (gNB) 203 and other gNB204. The gNB203 provides user and control plane protocol termination toward the UE201. The gNB203 may be connected to other gNB204 via an Xn interface (e.g., backhaul). The gNB203 may also be referred to as a base station, a base station transceiving station, a radio base station, a radio transceiving device, a transceiving device function, a basic service set (BSS), an extended service set (ESS), a TRP (Transmitter Receiver Point), or some other suitable terminologies. The gNB203 provides an access point to the EPC/5G-CN 210 for the UE201. Examples of the UE201 comprise a cellular phone, a smart phone, a session initiation protocol (SIP) phone, a laptop computer, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatuses. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The gNB203 is connected to the EPC/5G-CN 210 by an S1/NG interface. The EPC/5G-CN 210 comprises an MME (Mobility Management Entity)/AMF (Authentication Management Field)/UPF (User Plane Function) 211, other MME/AMF/UPF214, an S-GW (Service Gateway) 212, and a P-GW (Packet Data Network Gateway) 213. The MME/AMF/UPF211 is a control node that processes signaling between the UE201 and the EPC/5G-CN 210. Generally, the MME/AMF/UPF211 provides bearer and connection management. All user IP (Internet Protocol) packets are transmitted through the S-GW212, wherein the S-GW212 itself is connected to the P-GW213. The P-GW213 provides UE IP address allocation and other functions. The P-GW213 is connected to the Internet service 230. The Internet service 230 comprises operator-corresponding Internet protocol services, which may specifically comprise Internet, Intranet, an IMS (IP Multimedia Subsystem) and packet switching streaming services.

As one embodiment, the UE201 corresponds to the first node in the present application.

As one embodiment, the gNB203 corresponds to the second node in the present application.

As one embodiment, the UE201 corresponds to the first node in the present application, and the gNB203 corresponds to the second node in the present application.

As one embodiment, the gNB203 is a MacroCellular base station.

As one embodiment, the gNB203 is a Micro Cell base station.

As one embodiment, the gNB203 is a PicoCell base station.

As one embodiment, the gNB203 is a Femtocell.

As one embodiment, the gNB203 is a base station device that supports large latency differences.

As one embodiment, the gNB203 is a flying platform device.

As one embodiment, the gNB203 is a satellite device.

### Embodiment 3

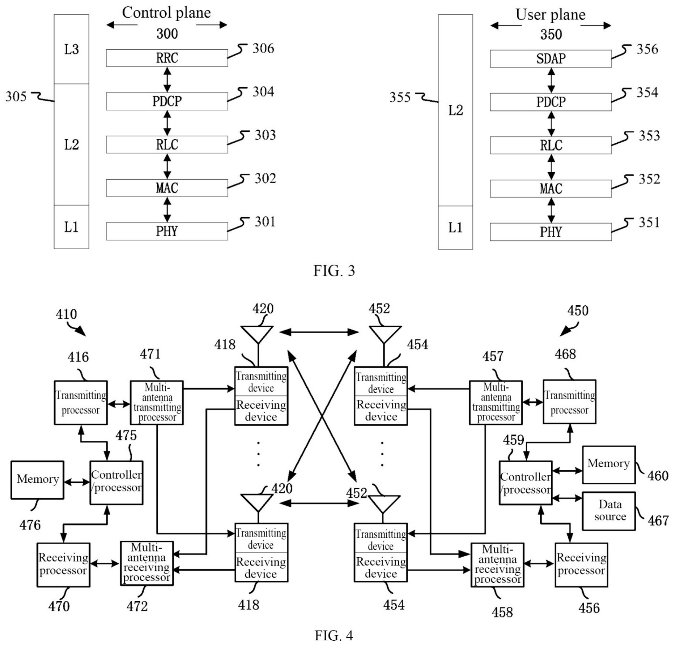

Embodiment 3 shows a schematic diagram of an embodiment of a wireless protocol architecture of one user plane and one control plane according to the present application, as shown in FIG. 3. FIG. 3 is a schematic diagram illustrating an embodiment of a radio protocol architecture for a user plane 350 and a control plane 300, and FIG. 3 shows a radio protocol architecture for a first communication node device (UE, gNB or RSU in V2X) and a second communication node device (gNB, UE or RSU in V2X), or the control plane 300 between two pieces of UE using three layers: Layer 1, Layer 2, and Layer 3. The Layer 1 (L1 layer) is the lowest layer and implements various PHY (physical layer) signal processing functions. The L1 layer will be referred to as PHY301 herein. The Layer 2 (L2 layer) 305 is above the PHY301 and is responsible for a link between the first communication node device and the second communication node device as well as between two pieces of UE through the PHY301. The L2 layer 305 comprises a MAC (Medium Access Control) sublayer 302, an RLC (Radio Link Control) sublayer 303, and a PDCP (Packet Data Convergence Protocol) sublayer 304, these sublayers terminating at the second communication node device. The PDCP sublayer 304 provides multiplexing between different radio bearers and logical channels. The PDCP sublayer 304 also provides security by encrypting data packets, and provides handover support for the first communication node device between the second communication node devices. The RLC sublayer 303 provides segmentation and reassembly of upper layer data packets, retransmission of lost data packets, and reordering of data packets to compensate for out-of-order reception due to an HARQ. The MAC sublayer 302 provides multiplexing between logical and transport channels. The MAC sublayer 302 is also responsible for allocating various radio resources (e.g., resource blocks) in one cell between the first communication node devices. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring a lower layer using RRC signaling between the second communication node device and the first communication node device. The radio protocol architecture of the user plane 350 comprises the Layer 1 (L1 layer) and the Layer 2 (L2 layer). The radio protocol architecture for the first communication node device and the second communication node device in the user plane 350 is substantially the same as corresponding layers and sublayers in the control plane 300 for a physical layer 351, a PDCP sublayer 354 in the L2 layer 355, an RLC sublayer 353 in the L2 layer 355, and a MAC sublayer 352 in the L2 layer 355, but the PDCP sublayer 354 also provides header compression for upper layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services. Although not shown in the figure, the first communication node device may have several upper layers above the L2 layer 355, comprising a network layer (e.g., an IP layer) terminating at a P-GW on a network side and an application layer terminating at another end (e.g., remote UE, a server, etc.) of the connection.

As one embodiment, the wireless protocol architecture in FIG. 3 is applicable to the first node in the present application.

As one embodiment, the wireless protocol architecture in FIG. 3 is applicable to the second node in the present application.

As one embodiment, one of the plurality of pieces of signaling in the present application is generated at the RRC sublayer 306.

As one embodiment, one of the plurality of pieces of signaling in the present application is generated at the PHY301.

As one embodiment, the plurality of pieces of signaling in the present application are all generated at the PHY301.

As one embodiment, the plurality of PDSCHs in the present application are all generated at the PHY351.

### Embodiment 4

Embodiment 4 shows a schematic diagram of a first communication device and a second communication device according to the present application, as shown in FIG. 4. FIG. 4 is a block diagram of a first communication device 410 and a second communication device 450 communicating with each other in an access network.

The first communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

The second communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

In transmission from the first communication device 410 to the second communication device 450, at the first communication device 410, upper layer data packets from a core network are provided to the controller/processor 475. The controller/processor 475 implements the functionality of the L2 layer. In the transmission from the first communication device 410 to the first communication device 450, the controller/processor 475 provides header compression, encryption, packet segmentation and reordering, multiplexing between logical and transport channels, and radio resource allocation to the second communication device 450 based on various priority metrics. The controller/processor 475 is also responsible for retransmission of lost packets and the signaling to the second communication device 450. The transmitting processor 416 and the multi-antenna transmitting processor 471 implement various signal processing functions for the L1 layer (i.e., physical layer). The transmitting processor 416 implements coding and interleaving to facilitate forward error correction (FEC) at the second communication device 450, as well as mapping of signal clusters based on various modulation schemes (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to a subcarrier, multiplexes with a reference signal (e.g., pilot frequency) in a time domain and/or frequency domain, and then uses an inverse fast Fourier transform (IFFT) to generate a physical channel carrying a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the first communication device 410 to the second communication device 450, at the second communication device 450, each receiving device 454 receives a signal through its corresponding antenna 452. Each receiving device 454 recovers information modulated onto a radio frequency carrier, converts a radio frequency stream into a baseband multi-carrier symbol stream, and provides it to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 uses a fast Fourier transform (FFT) to convert the baseband multi-carrier symbol stream from a time domain to a frequency domain after the receiving analog precoding/beamforming operations. In the frequency domain, a physical layer data signal and the reference signal are demultiplexed by the receiving processor 456, wherein the reference signal will be used for channel estimation, and the data signal is recovered after multi-antenna detection in the multi-antenna receiving processor 458 to recover any spatial stream destined for the second communication device 450. Symbols on each spatial stream are demodulated and recovered in the receiving processor 456, and a soft decision is generated. The receiving processor 456 then decodes and deinterleaves the soft decision to recover upper layer data and control signals transmitted by the first communication device 410 on the physical channel. The upper layer data and control signals are then provided to the controller/processor 459. The controller/processor 459 implements functions of the L2 layer. The controller/processor 459 may be associated with the memory 460 that stores program code and data. The memory 460 may be referred to as a computer-readable medium. In the transmission from the first communication device 410 to the second communication device 450, the controller/processor 459 provides demultiplexing between transport and logical channels, packet reassembly, decryption, header decompression, and control signal processing to recover upper layer data packets from the core network. The upper layer data packets are then provided to all protocol layers above the L2 layer. Various control signals may also be provided to the L3 for L3 processing.

In the transmission from the second communication device 450 to the first communication device 410, at the second communication device 450, the data source 467 is used for providing the upper layer data packets to the controller/processor 459. The data source 467 represents all protocol layers above the L2 layer. Similar to the sending function at the first communication device 410 described in the transmission from the first communication device 410 to the second communication device 450, the controller/processor 459 implements header compression, encryption, packet segmentation and reordering, and multiplexing between logical and transport channels based on radio resource allocation, and implements the functions of the L2 layer for a user plane and a control plane. The controller/processor 459 is also responsible for the retransmission of lost packets and the signaling to the first communication device 410. The transmitting processor 468 performs modulation mapping and channel coding processing, and the multi-antenna transmitting processor 457 performs digital multi-antenna spatial precoding, comprising codebook-based precoding and non-codebook-based precoding, and beamforming processing. Then, the transmitting processor 468 modulates the generated spatial stream into a multi-carrier/single-carrier symbol stream, which is provided to different antennas 452 via the transmitting device 454 after analog precoding/beamforming operations in the multi-antenna transmitting processor 457. Each transmitting device 454 first converts the baseband symbol stream provided by the multi-antenna transmitting processor 457 into the radio frequency symbol stream, which is then provided to the antenna 452.

In the transmission from the second communication device 450 to the first communication device 410, a function at the first communication device 410 is similar to a receiving function at the second communication device 450 described in the transmission from the first communication device 410 to the second communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 that stores program code and data. The memory 476 may be referred to as a computer-readable medium. In the transmission from the second communication device 450 to the first communication device 410, the controller/processor 475 provides demultiplexing between transport and logical channels, packet reassembly, decryption, header decompression, and control signal processing to recover upper layer data packets from the UE450. The upper layer data packets from the controller/processor 475 can be provided to the core network.

As one embodiment, the first node in the present application comprises the second communication device 450, and the second node in the present application comprises the first communication device 410.

As one sub-embodiment of the above embodiment, the first node is user equipment, and the second node is a relay node.

As one sub-embodiment of the above embodiment, the first node is user equipment, and the second node is a base station device.

As one sub-embodiment of the above embodiment, the first node is a relay node, and the second node is a base station device.

As one sub-embodiment of the above embodiment, the second communication device 450 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for HARQ operations.

As one sub-embodiment of the above embodiment, the first communication device 410 comprises: at least one controller/processor; and the at least one controller/processor is responsible for performing error detection using acknowledgement (ACK) and/or negative acknowledgement (NACK) protocols to support HARQ operations.

As one embodiment, the second communication device 450 comprises: at least one processor and at least one memory, the at least one memory comprising computer program code; and the at least one memory and the computer program code are configured to be used together with the at least one processor. The second communication device 450 apparatus at least: receives a plurality of pieces of signaling; and receives and decodes a plurality of PDSCHs, the plurality of pieces of signaling respectively scheduling the plurality of PDSCHs, and the plurality of PDSCHs comprising a unicast PDSCH and a multicast PDSCH, wherein whether a total number of frequency-domain resources occupied by the plurality of PDSCHs can be greater than a first upper limit is related to whether the plurality of PDSCHs are overlapped in a time domain, and the first upper limit is a positive integer greater than 1.

As one sub-embodiment of the above embodiment, the second communication device 450 corresponds to the first node in the present application.

As one embodiment, the second communication device 450 comprises: a memory storing a computer-readable instruction program, the computer-readable instruction program generating actions when executed by at least one processor, and the actions comprising: receiving a plurality of pieces of signaling; and receiving and decoding a plurality of PDSCHs, the plurality of pieces of signaling respectively scheduling the plurality of PDSCHs, and the plurality of PDSCHs comprising a unicast PDSCH and a multicast PDSCH, wherein whether a total number of frequency-domain resources occupied by the plurality of PDSCHs can be greater than a first upper limit is related to whether the plurality of PDSCHs are overlapped in a time domain, and the first upper limit is a positive integer greater than 1.

As one sub-embodiment of the above embodiment, the second communication device 450 corresponds to the first node in the present application.

As one embodiment, the first communication device 410 comprises: at least one processor and at least one memory, the at least one memory comprising computer program code; and the at least one memory and the computer program code are configured to be used together with the at least one processor. The first communication device 410 apparatus at least: sends a plurality of pieces of signaling; and sends a plurality of PDSCHs, the plurality of pieces of signaling respectively scheduling the plurality of PDSCHs, and the plurality of PDSCHs comprising a unicast PDSCH and a multicast PDSCH, wherein whether a total number of frequency-domain resources occupied by the plurality of PDSCHs can be greater than a first upper limit is related to whether the plurality of PDSCHs are overlapped in a time domain, and the first upper limit is a positive integer greater than 1.

As one sub-embodiment of the above embodiment, the first communication device 410 corresponds to the second node in the present application.

As one embodiment, the first communication device 410 comprises: a memory storing a computer-readable instruction program, the computer-readable instruction program generating actions when executed by at least one processor, and the actions comprising: sending a plurality of pieces of signaling; and sending a plurality of PDSCHs, the plurality of pieces of signaling respectively scheduling the plurality of PDSCHs, and the plurality of PDSCHs comprising a unicast PDSCH and a multicast PDSCH, wherein whether a total number of frequency-domain resources occupied by the plurality of PDSCHs can be greater than a first upper limit is related to whether the plurality of PDSCHs are overlapped in a time domain, and the first upper limit is a positive integer greater than 1.

As one sub-embodiment of the above embodiment, the first communication device 410 corresponds to the second node in the present application.

As one embodiment, the second communication device 450 comprises: at least one processor and at least one memory, the at least one memory comprising computer program code; and the at least one memory and the computer program code are configured to be used together with the at least one processor. The second communication device 450 at least: receives a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH, wherein whether the first node needs to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

As one sub-embodiment of the above embodiment, the second communication device 450 corresponds to the first node in the present application.

As one embodiment, the second communication device 450 comprises: a memory storing a computer-readable instruction program, the computer-readable instruction program generating actions when executed by at least one processor, and the actions comprising: receiving a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH, wherein whether the first node needs to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

As one sub-embodiment of the above embodiment, the second communication device 450 corresponds to the first node in the present application.

As one embodiment, the first communication device 410 comprises: at least one processor and at least one memory, the at least one memory comprising computer program code; and the at least one memory and the computer program code are configured to be used together with the at least one processor. The first communication device 410 apparatus at least: sends a plurality of pieces of signaling; and sends a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH, wherein whether receiving ends of the plurality of pieces of signaling need to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

As one sub-embodiment of the above embodiment, the first communication device 410 corresponds to the second node in the present application.

As one embodiment, the first communication device 410 comprises: a memory storing a computer-readable instruction program, the computer-readable instruction program generating actions when executed by at least one processor, and the actions comprising: sending a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH, wherein whether receiving ends of the plurality of pieces of signaling need to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

As one sub-embodiment of the above embodiment, the first communication device 410 corresponds to the second node in the present application.

As one embodiment, at least one of {the antenna 452, the receiving device 454, the multi-antenna receiving processor 458, the receiving processor 456, the controller/processor 459, the memory 460, and the data source 467} is used for receiving the plurality of pieces of signaling in the present application.

As one embodiment, at least one of {the antenna 420, the transmitting device 418, the multi-antenna transmitting processor 471, the transmitting processor 416, the controller/processor 475, and the memory 476} is used for sending the plurality of pieces of signaling in the present application.

As one embodiment, at least one of {the antenna 452, the receiving device 454, the multi-antenna receiving processor 458, the receiving processor 456, the controller/processor 459, the memory 460, and the data source 467} is used for receiving at least one PDSCH in the present application.

As one embodiment, at least one of {the antenna 420, the transmitting device 418, the multi-antenna transmitting processor 471, the transmitting processor 416, the controller/processor 475, and the memory 476} is used for sending at least one PDSCH in the present application.

As one embodiment, at least one of {the antenna 452, the receiving device 454, the multi-antenna receiving processor 458, the receiving processor 456, the controller/processor 459, the memory 460, and the data source 467} is used for decoding at least one PDSCH in the present application.

As one embodiment, at least one of {the antenna 452, the transmitting device 454, the multi-antenna transmitting processor 458, the transmitting processor 468, the controller/processor 459, the memory 460, and the data source 467} is used for sending HARQ-ACK bits in the present application.

As one embodiment, at least one of {the antenna 420, the receiving device 418, the multi-antenna receiving processor 472, the receiving processor 470, the controller/processor 475, and the memory 476} is used for receiving HARQ-ACK bits in the present application.

### Embodiment 5

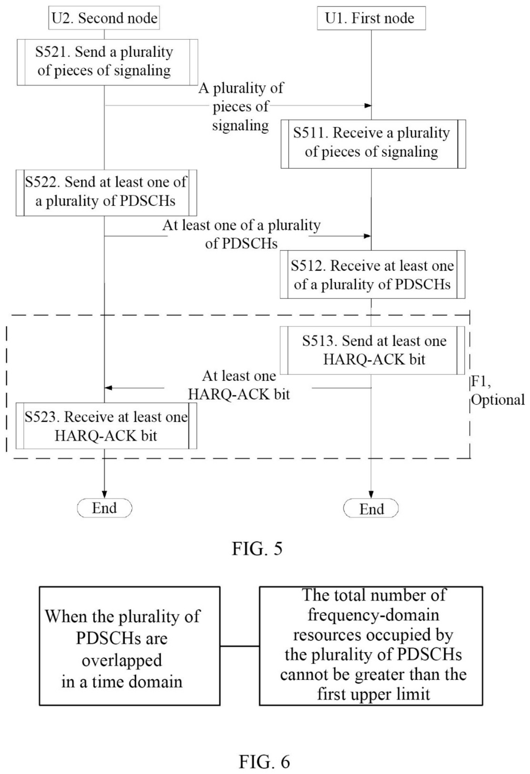

Embodiment 5 illustrates a flow chart of signal transmission according to one embodiment of the present application, as shown in FIG. 5. In FIG. 5, a first node U1 and a second node U2 communicate through an air interface. In particular, a step in a dotted block F1 is optional.

The first node U1 receives a plurality of pieces of signaling in step S511; receives at least one of a plurality of PDSCHs in step S512; and sends at least one HARQ-ACK bit in step S513.

The second node U2 sends a plurality of pieces of signaling in step S521; sends at least one of a plurality of PDSCHs in step S522; and receives at least one HARQ-ACK bit in step S523.

In Embodiment 5, the plurality of pieces of signaling respectively schedule the plurality of PDSCHs, and the plurality of PDSCHs comprise a unicast PDSCH and a multicast PDSCH.

As one sub-embodiment of Embodiment 5, the first node U1 receives and decodes the plurality of PDSCHs; the second node U2 sends the plurality of PDSCHs; whether a total number of frequency-domain resources occupied by the plurality of PDSCHs can be greater than a first upper limit is related to whether the plurality of PDSCHs are overlapped in a time domain, and the first upper limit is a positive integer greater than 1; when the plurality of PDSCHs are overlapped in the time domain, the total number of frequency-domain resources occupied by the plurality of PDSCHs cannot be greater than the first upper limit; when the plurality of PDSCHs are not overlapped in the time domain, the total number of frequency-domain resources occupied by the plurality of PDSCHs can be greater than the first upper limit; the first upper limit is equal to 25 or 12; the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs; the plurality of PDSCHs are not overlapped in a frequency domain; and the at least one HARQ-ACK bit comprises an HARQ-ACK bit generated for each PDSCH among the plurality of PDSCHs.

As one sub-embodiment of Embodiment 5, the plurality of PDSCHs are overlapped in a time domain; whether the first node needs to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1; when the total number of frequency-domain resources occupied by the plurality of PDSCHs is greater than the first upper limit, the first node does not need to process the first PDSCH; when the total number of frequency-domain resources occupied by the plurality of PDSCHs is not greater than the first upper limit, the first node processes the first PDSCH; a second PDSCH is a PDSCH that is other than the first PDSCH in the plurality of PDSCHs and has a communication mode different from a communication mode of the first PDSCH, and the first node receives and processes the second PDSCH; the first upper limit is equal to 25 or 12; the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs; the at least one HARQ-ACK bit at least comprises an HARQ-ACK bit generated for the second PDSCH.

As one embodiment, the first node U1 is the first node in the present application.

As one embodiment, the second node U2 is the second node in the present application.

As one embodiment, the first node U1 is one piece of UE.

As one embodiment, the second node U2 is one base station.

As one embodiment, an air interface between the second node U2 and the first node U1 is a Uu interface.

As one embodiment, an air interface between the second node U2 and the first node U1 comprises a cellular link.

As one embodiment, an air interface between the second node U2 and the first node U1 comprises a wireless interface between a base station device and user equipment.

As one embodiment, an air interface between the second node U2 and the first node U1 comprises a wireless interface between a satellite device and user equipment.

As one embodiment, the step in the dotted block F1 exists.

As one embodiment, the step in the dotted block F1 does not exist.

### Embodiment 6

Embodiment 6 illustrates a schematic diagram illustrating that a total number of frequency-domain resources occupied by a plurality of PDSCHs cannot be greater than a first upper limit according to one embodiment of the present application, as shown in FIG. 6.

In Embodiment 6, when the plurality of PDSCHs are overlapped in a time domain, the total number of frequency-domain resources occupied by the plurality of PDSCHs cannot be greater than the first upper limit.

As one embodiment, the meaning of the expression of "the total number of frequency-domain resources occupied by the plurality of PDSCHs cannot be greater than the first upper limit" is: the total number of frequency-domain resources occupied by the plurality of PDSCHs being greater than the first upper limit (an occurrence of this event) is not expected.

As one embodiment, the meaning of the expression of "the total number of frequency-domain resources occupied by the plurality of PDSCHs cannot be greater than the first upper limit" is: the total number of frequency-domain resources occupied by the plurality of PDSCHs being greater than the first upper limit (an occurrence of this event) is not allowed.

As one embodiment, the meaning of the expression of "the total number of frequency-domain resources occupied by the plurality of PDSCHs cannot be greater than the first upper limit" is: the total number of frequency-domain resources occupied by the plurality of PDSCHs being greater than the first upper limit (an occurrence of this event) is not within an expected processing range.

As one embodiment, the meaning of the plurality of PDSCHs being overlapped in a time domain is: the plurality of PDSCHs are fully or partially overlapped in a time domain.

As one embodiment, the meaning of the plurality of PDSCHs being overlapped in a time domain is: each PDSCH among the plurality of PDSCHs is fully or partially overlapped with any other PDSCH among the plurality of PDSCHs in a time domain.

As one embodiment, when the plurality of PDSCHs are not overlapped in a time domain, the total number of frequency-domain resources occupied by the plurality of PDSCHs can be greater than the first upper limit.

As one embodiment, the meaning of the expression of "the total number of frequency-domain resources occupied by the plurality of PDSCHs can be greater than the first upper limit" is: the total number of frequency-domain resources occupied by the plurality of PDSCHs being greater than the first upper limit (an occurrence of this event) is expected.

As one embodiment, the meaning of the expression of "the total number of frequency-domain resources occupied by the plurality of PDSCHs can be greater than the first upper limit" is: the total number of frequency-domain resources occupied by the plurality of PDSCHs being greater than the first upper limit (an occurrence of this event) is allowed.

As one embodiment, the meaning of the expression of "the total number of frequency-domain resources occupied by the plurality of PDSCHs can be greater than the first upper limit" is: the total number of frequency-domain resources occupied by the plurality of PDSCHs being greater than the first upper limit (an occurrence of this event) is within an expected processing range.

### Embodiment 7

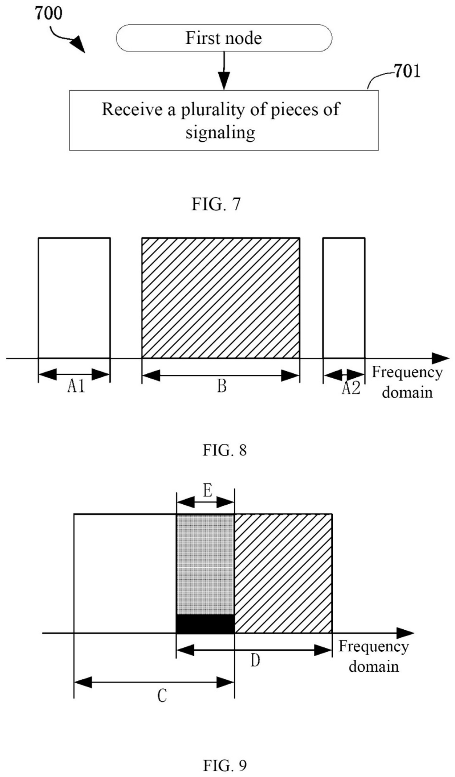

Embodiment 7 illustrates a processing flow chart of a first node according to one embodiment of the present application, as shown in FIG. 7.

In Embodiment 7, the first node in the present application receives a plurality of pieces of signaling in step 701.

In Embodiment 7, the plurality of pieces of signaling respectively schedule a plurality of PDSCHs, the plurality of PDSCHs are overlapped in a time domain, and the plurality of PDSCHs comprise a unicast PDSCH and a multicast PDSCH; and whether the first node needs to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

As one embodiment, the plurality of pieces of signaling are respectively borne by the plurality of PDCCHs.

As one embodiment, the benefits of the above method comprise: small scheduling delay.

As one embodiment, the plurality of pieces of signaling are respectively a plurality of pieces of DCI.

As one embodiment, the benefits of the above method comprise: small scheduling delay.

As one embodiment, a CRC of one piece of signaling among the plurality of pieces of signaling is scrambled by a C-RNTI, and a CRC of another piece of signaling among the plurality of pieces of signaling is scrambled by a G-RNTI.

As one embodiment, the characteristics of the above method comprise: a C-RNTI is used for scheduling a unicast PDSCH, and a G-RNTI is used for scheduling a multicast PDSCH.

As one embodiment, the benefits of the above method comprise: small scheduling delay.

As one embodiment, a CRC of one piece of signaling among the plurality of pieces of signaling is scrambled by a C-RNTI/CS-RNTI, and a CRC of another piece of signaling among the plurality of pieces of signaling is scrambled by a G-RNTI/G-CS-RNTI.

As one embodiment, the characteristics of the above method comprise: a C-RNTI/CS-RNTI is used for scheduling a unicast PDSCH, and a G-RNTI/G-CS-RNTI is used for scheduling a multicast PDSCH.

As one embodiment, the benefits of the above method comprise: small scheduling delay.

As one embodiment, the plurality of pieces of signaling are all in a DCI format; a CRC of one piece of signaling among the plurality of pieces of signaling is scrambled by a C-RNTI/CS-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI/G-CS-RNTI, and the another piece of signaling among the plurality of pieces of signaling is used for scheduling one multicast PDSCH in the plurality of PDSCHs.

As one embodiment, the benefits of the above method comprise: small scheduling delay.

As one embodiment, the plurality of pieces of signaling comprise NAS (Network Attached Storage) signaling.

As one embodiment, the plurality of pieces of signaling comprise RRC signaling.

As one embodiment, one unicast PDSCH is a PDSCH for point-to-point transmission.

As one embodiment, one multicast PDSCH is a PDSCH for point-to-multipoint transmission.

As one embodiment, one unicast PDSCH is a PDSCH scheduled by a unicast DCI format, and the unicast DCI format has a CRC which is scrambled by a C-RNTI or a CS-RNTI or an MCS-C-RNTI.

As one embodiment, one multicast PDSCH is a PDSCH scheduled by a multicast DCI format, and the multicast DCI format has a CRC that is scrambled by a G-RNTI or a G-CS-RNTI.

As one embodiment, the plurality of pieces of signaling are 2 pieces of signaling, and the plurality of PDSCHs are 2 PDSCHs.

As one embodiment, the benefits of the above method comprise: simplifying complexity of the system design.

As one embodiment, the plurality of pieces of signaling are more than 2 pieces of signaling, and the plurality of PDSCHs are more than 2 PDSCHs.

As one embodiment, the plurality of pieces of signaling and the plurality of PDSCHs are in one-to-one correspondence.

As one embodiment, the plurality of pieces of signaling are 2 pieces of signaling.

As one embodiment, the plurality of PDSCHs are: one unicast PDSCH and one multicast PDSCH.

As one embodiment, any 2 PDSCHs among the plurality of PDSCHs do not occupy any same PRBs.

As one embodiment, the plurality of PDSCHs are not overlapped in a frequency domain.

As one embodiment, the benefits of the above method comprise: helping to support unicast PDSCHs and multicast PDSCHs with frequency division multiplexing.

As one embodiment, when the plurality of PDSCHs are overlapped in a time domain, any 2 PDSCHs among the plurality of PDSCHs do not occupy any same PRBs.

As one embodiment, when the plurality of PDSCHs are overlapped in a time domain, the plurality of PDSCHs are not overlapped in a frequency domain.

As one embodiment, the benefits of the above method comprise: helping to support unicast PDSCHs and multicast PDSCHs with frequency division multiplexing.

As one embodiment, the plurality of PDSCHs are overlapped in a frequency domain.

As one embodiment, the benefits of the above method comprise: helping to support unicast PDSCHs and multicast PDSCHs with space division multiplexing.

As one embodiment, frequency-domain resources occupied by the plurality of PDSCHs are counted in accordance with RBs.

As one embodiment, the total number of frequency-domain resources occupied by the plurality of PDSCHs is: a total number of RBs occupied by the plurality of PDSCHs.

As one embodiment, frequency-domain resources occupied by the plurality of PDSCHs are counted in accordance with PRBs.

As one embodiment, the total number of frequency-domain resources occupied by the plurality of PDSCHs is: a total number of PRBs occupied by the plurality of PDSCHs.

As one embodiment, frequency-domain resources occupied by the plurality of PDSCHs are counted in accordance with subcarriers.

As one embodiment, the total number of frequency-domain resources occupied by the plurality of PDSCHs is: a total number of subcarriers occupied by the plurality of PDSCHs.

As one embodiment, each PDSCH among the plurality of PDSCHs occupies consecutive frequency-domain resources in a frequency domain.

As one embodiment, one PDSCH among the plurality of PDSCHs occupies consecutive frequency-domain resources in a frequency domain.

As one embodiment, one PDSCH among the plurality of PDSCHs occupies inconsecutive frequency-domain resources in a frequency domain.

As one embodiment, a number of frequency-domain resources occupied by each PDSCH among the plurality of PDSCHs is not greater than the first upper limit.

As one embodiment, the definition of the first upper limit is related to UE capabilities.

As one embodiment, the use of the first upper limit is related to UE capabilities.

As one embodiment, the first upper limit is determined based on reporting of the first node.

As one embodiment, the first node reports the first upper limit as UE capability information to a base station.

As one embodiment, based on UE capability information reported by the first node, the first upper limit is configured to the first node.

As one embodiment, the first upper limit is a maximum number of PRBs that may be assigned to unicast PDSCHs for a piece of RedCap UE.

As one embodiment, the first upper limit is predefined for a piece of RedCap UE.

As one embodiment, the first upper limit does not exceed a number of subcarriers included in a bandwidth of 5 MHz.

As one embodiment, the first upper limit does not exceed a number of PRBs included in a bandwidth of 5 MHz.

As one embodiment, frequency-domain resources occupied by the plurality of PDSCHs are counted in accordance with RBs/PRBs, and the first upper limit is 25.

As one embodiment, the benefits of the above method comprise: for a configuration of a 15 kHz SCS (Subcarrier Spacing), on the premise of ensuring that a maximum scheduling bandwidth does not exceed 5 MHz, facilitating UE processing and helping to obtain a higher frequency-domain resource utilization rate.

As one embodiment, the benefits of the above method comprise: helping to reduce processing complexity of the first node.

As one embodiment, the benefits of the above method comprise: helping to support RedCap UE.

As one embodiment, frequency-domain resources occupied by the plurality of PDSCHs are counted in accordance with RBs/PRBs, and the first upper limit is 12.

As one embodiment, the benefits of the above method comprise: for a configuration of a 30 kHz SCS (Subcarrier Spacing), on the premise of ensuring that a maximum scheduling bandwidth does not exceed 5 MHz, facilitating UE processing and helping to obtain a higher frequency-domain resource utilization rate.

As one embodiment, the benefits of the above method comprise: helping to reduce processing complexity of the first node.

As one embodiment, the benefits of the above method comprise: helping to support RedCap UE.

As one embodiment, the first upper limit is used for limiting a number of RBs occupied by unicast PDSCHs.

As one embodiment, the first upper limit is used for limiting a number of PRBs occupied by unicast PDSCHs.

As one embodiment, the first upper limit is used for limiting a number of RBs occupied by multicast PDSCHs.

As one embodiment, the first upper limit is used for limiting a number of PRBs occupied by multicast PDSCHs.

As one embodiment, the first upper limit is equal to a maximum number of RBs that may be occupied by one unicast PDSCH.

As one embodiment, the benefits of the above method comprise: helping to reduce processing complexity of the first node.

As one embodiment, the benefits of the above method comprise: helping to support RedCap UE.

As one embodiment, the first upper limit is equal to a maximum number of PRBs that may be occupied by one unicast PDSCH.

As one embodiment, the benefits of the above method comprise: helping to reduce processing complexity of the first node.

As one embodiment, the benefits of the above method comprise: helping to support RedCap UE.

As one embodiment, for the first node, a number of PRBs occupied by one unicast PDSCH does not exceed the first upper limit.

As one embodiment, the benefits of the above method comprise: helping to reduce processing complexity of the first node.

As one embodiment, the benefits of the above method comprise: helping to support RedCap UE.

As one embodiment, for the first node, a number of RBs occupied by one unicast PDSCH does not exceed the first upper limit.

As one embodiment, the benefits of the above method comprise: helping to reduce processing complexity of the first node.

As one embodiment, the benefits of the above method comprise: helping to support RedCap UE.

As one embodiment, for the first node, a number of PRBs occupied by one multicast PDSCH does not exceed the first upper limit.

As one embodiment, the benefits of the above method comprise: helping to reduce processing complexity of the first node.

As one embodiment, the benefits of the above method comprise: helping to support RedCap UE.

As one embodiment, for the first node, a number of RBs occupied by one multicast PDSCH does not exceed the first upper limit.

As one embodiment, the benefits of the above method comprise: helping to reduce processing complexity of the first node.

As one embodiment, the benefits of the above method comprise: helping to support RedCap UE.

As one embodiment, when there exist at least two PDSCHs among the plurality of PDSCHs that both occupy a first frequency-domain resource, the first frequency-domain resource is counted only once in the determination of the total number of frequency-domain resources occupied by the plurality of PDSCHs.

As one embodiment, when there exist K PDSCHs among the plurality of PDSCHs that all occupy a first frequency-domain resource, the first frequency-domain resource is counted K times in the determination of the total number of frequency-domain resources occupied by the plurality of PDSCHs, and the K is a positive integer.

As one embodiment, the first frequency-domain resource is one RB.

As one embodiment, the first frequency-domain resource is one PRB.

As one embodiment, the first frequency-domain resource is one subcarrier.

As one embodiment, the plurality of PDSCHs are received on a first BWP, and the first upper limit is less than a number of RBs/PRBs occupied by the first BWP.

As one embodiment, the benefits of the above method comprise: helping to support UE with limited frequency-domain reception capabilities for PDSCHs.

As one embodiment, the behavior of processing the first PDSCH comprises: decoding the first PDSCH.

As one embodiment, the behavior of processing the first PDSCH comprises: executing operations comprising decoding on signals received in the first PDSCH.

As one embodiment, the behavior of processing the first PDSCH comprises: acquiring data from signals received in the first PDSCH by executing operations including filtering, demodulation, and channel decoding.

As one embodiment, the behavior of processing the first PDSCH refers to: decoding the first PDSCH.

As one embodiment, the behavior of decoding the first PDSCH comprises: decoding a transport block transmitted in the first PDSCH.

As one embodiment, the behavior of decoding the first PDSCH comprises: executing operations including channel decoding on signals received in the first PDSCH.

As one embodiment, the behavior of decoding the first PDSCH comprises: decoding data information transmitted in the first PDSCH.

As one embodiment, before one PDSCH is decoded by the first node, the first node receives this PDSCH.

As one embodiment, when the total number of frequency-domain resources occupied by the plurality of PDSCHs is greater than the first upper limit, the first node does not need to process the first PDSCH.

As one embodiment, the benefits of the above method comprise: helping to achieve: discarding PDSCHs with lower importance to ensure the reception performance of PDSCHs with higher importance on the premise of ensuring that UE capabilities of the first node are not exceeded, thereby optimizing communication performance.

As one embodiment, the benefits of the above method comprise: helping to overcome the problem of being unable to feed back HARQ-ACK information for unicast PDSCHs and multicast PDSCHs in a timely manner due to limited UE processing capabilities, and helping to improve transmission reliability.

As one embodiment, when the total number of frequency-domain resources occupied by the plurality of PDSCHs is greater than the first upper limit, the first node only needs to process PDSCHs other than the first PDSCH among the plurality of PDSCHs.

As one embodiment, the meaning of the expression of "the first node does not need to process the first PDSCH" is: the first node is not expected to process the first PDSCH.

As one embodiment, the meaning of the expression of "the first node does not need to process the first PDSCH" is: the first node determines whether to process the first PDSCH by itself.

As one embodiment, the meaning of the expression of "the first node does not need to process the first PDSCH" is: whether the first node processes the first PDSCH depends on UE implementation.

As one embodiment, when the total number of frequency-domain resources occupied by the plurality of PDSCHs is not greater than the first upper limit, the first node processes the first PDSCH.

As one embodiment, the benefits of the above method comprise: helping to fully utilize the UE capabilities to achieve good resource utilization efficiency.

As one embodiment, when the total number of frequency-domain resources occupied by the plurality of PDSCHs is not greater than the first upper limit, the first node determines to process the first PDSCH.

As one embodiment, the benefits of the above method comprise: helping to fully utilize the UE capabilities to achieve good resource utilization efficiency.

As one embodiment, when the total number of frequency-domain resources occupied by the plurality of PDSCHs is not greater than the first upper limit, the first node needs to process the first PDSCH.

As one embodiment, the benefits of the above method comprise: helping to fully utilize the UE capabilities to achieve good resource utilization efficiency.

As one embodiment, the expression of "needs to process the first PDSCH" comprises: shall be able to decode the first PDSCH.

As one embodiment, the meaning of the expression of "needs to process the first PDSCH" is: shall be able to decode the first PDSCH.

As one embodiment, only when the total number of frequency-domain resources occupied by the plurality of PDSCHs is not greater than the first upper limit, an interval between a starting time of each PDSCH among the plurality of PDSCHs and an ending time of any other PDSCH does not exceed 8 downlink symbols, and frequency-domain resources occupied by at least one PDSCH among the plurality of PDSCH are consecutive in a frequency domain, the first node determines to process the first PDSCH; otherwise, the first node does not need to process the first PDSCH.

As one embodiment, only when the total number of frequency-domain resources occupied by the plurality of PDSCHs is not greater than the first upper limit, an interval between a starting time of each PDSCH among the plurality of PDSCHs and a starting time of any other PDSCH does not exceed 1 downlink symbol, an interval between the starting time of each PDSCH among the plurality of PDSCHs and an ending time of any other PDSCH does not exceed 11 downlink symbols, and frequency-domain resource occupied by each PDSCH among the plurality of PDSCHs are consecutive in a frequency domain, the first node determines to process the first PDSCH; otherwise, the first node does not need to process the first PDSCH.

As one embodiment, only when the total number of frequency-domain resources occupied by the plurality of PDSCHs is not greater than the first upper limit, an interval between a starting time of each PDSCH among the plurality of PDSCHs and a starting time of any other PDSCH does not exceed 1 downlink symbol, an interval between an ending time of each PDSCH among the plurality of PDSCHs and an ending time of any other PDSCH does not exceed 3 downlink symbols, and frequency-domain resources occupied by at least one PDSCH among the plurality of PDSCHs are consecutive in a frequency domain, the first node determines to process the first PDSCH; otherwise, the first node does not need to process the first PDSCH.

As one embodiment, only when the total number of frequency-domain resources occupied by the plurality of PDSCHs is not greater than the first upper limit, an interval between a starting time of each PDSCH among the plurality of PDSCHs and a starting time of any other PDSCH does not exceed 2 downlink symbols, and an interval between an ending time of each PDSCH among the plurality of PDSCHs and an ending time of any other PDSCH does not exceed 1 downlink symbol, the first node determines to process the first PDSCH; otherwise, the first node does not need to process the first PDSCH.

As one embodiment, the benefits of the above method comprise: helping to further reduce the requirement for the UE processing capabilities.

As one embodiment, when the total number of frequency-domain resources occupied by the plurality of PDSCHs is greater than the first upper limit, the first node does not need to process the first PDSCH; and when the total number of frequency-domain resources occupied by the plurality of PDSCHs is not greater than the first upper limit, the first node determines to process the first PDSCH.

As one embodiment, the first PDSCH is any PDSCH among the plurality of PDSCHs.

As one embodiment, a second PDSCH is a PDSCH other than the first PDSCH among the plurality of PDSCHs, and the first node processes the second PDSCH.

As one embodiment, a second PDSCH is a PDSCH other than the first PDSCH among the plurality of PDSCHs, and the first node determines to process the second PDSCH.

As one embodiment, a second PDSCH is a PDSCH other than the first PDSCH among the plurality of PDSCHs, and the first node needs to process the second PDSCH.

As one embodiment, the expression of "needs to process the second PDSCH" comprises: shall be able to decode the second PDSCH.

As one embodiment, the meaning of the expression of "needs to process the second PDSCH" is: shall be able to decode the second PDSCH.

As one embodiment, the behavior of processing the second PDSCH comprises: decoding the second PDSCH.

As one embodiment, the behavior of processing the second PDSCH comprises: executing operations including decoding on signals received in the second PDSCH.

As one embodiment, the behavior of processing the second PDSCH comprises: acquiring data from signals received in the second PDSCH by executing operations including filtering, demodulation, and channel decoding.

As one embodiment, the behavior of decoding the second PDSCH refers to: decoding the second PDSCH.

As one embodiment, the behavior of decoding the second PDSCH comprises: decoding a transport block transmitted in the second PDSCH.

As one embodiment, the behavior of decoding the second PDSCH comprises: executing operations including channel decoding on signals received in the second PDSCH.

As one embodiment, the behavior of decoding the second PDSCH comprises: decoding data information transmitted in the second PDSCH.

As one embodiment, a second PDSCH is a PDSCH other than the first PDSCH among the plurality of PDSCHs, and the first node determines to decode the second PDSCH.

As one embodiment, the first PDSCH is a PDSCH scheduled by a piece of first signaling, and the first signaling is signaling other than a piece of latest received signaling among the plurality of pieces of signaling.

As one sub-embodiment of the above embodiment, a second PDSCH is a PDSCH other than the first PDSCH in the plurality of PDSCHs, the first node determines to process the second PDSCH, and the second PDSCH is a PDSCH scheduled by a piece of latest received signaling among the plurality of pieces of signaling.

As one embodiment, the benefits of the above method comprise: helping to improve scheduling flexibility, and optimizing system scheduling.

As one embodiment, the first PDSCH is a unicast PDSCH.

As one sub-embodiment of the above embodiment, the second PDSCH is a multicast PDSCH.

As one embodiment, the benefits of the above method comprise: ensuring transmission performance of multicast PDSCHs.

As one embodiment, the benefits of the above method comprise: helping to improve the resource utilization rate.

As one embodiment, the first PDSCH is a multicast PDSCH.

As one sub-embodiment of the above embodiment, the second PDSCH is a unicast PDSCH.

As one embodiment, the benefits of the above method comprise: helping to ensure transmission performance of unicast PDSCHs.

As one embodiment, the benefits of the above method comprise: helping to improve scheduling flexibility.

As one embodiment, the first node does not generate HARQ-ACK bits for PDSCHs that do not need to be processed by the first node.

### Embodiment 8

Embodiment 8 illustrates a schematic diagram illustrating frequency-domain resources occupied by a plurality of PDSCHs according to one embodiment of the present application, as shown in FIG. 8. In FIG. 8, the plurality of PDSCHs comprise a PDSCH#1 and a PDSCH#2; and 2 gray filled blocks represent inconsecutive frequency-domain resources occupied by the PDSCH#1, and a slash filled block represents frequency-domain resources occupied by the PDSCH#2.

In Embodiment 8, a number of frequency-domain resources occupied by the PDSCH#1 is A1+A2, a number of frequency-domain resources occupied by the PDSCH#2 is B, and the total number of frequency-domain resources occupied by the plurality of PDSCHs is A1+A2+B; and the A1, the A2 and the B are all positive integers.

As one sub-embodiment of Embodiment 8, the PDSCH#1 and the PDSCH#2 are a unicast PDSCH and a multicast PDSCH, respectively.

As one sub-embodiment of Embodiment 8, the PDSCH#2 and the PDSCH#1 are a unicast PDSCH and a multicast PDSCH, respectively.

### Embodiment 9

Embodiment 9 illustrates a schematic diagram illustrating frequency-domain resources occupied by a plurality of PDSCHs according to one embodiment of the present application, as shown in FIG. 9. In FIG. 9, the plurality of PDSCHs comprise a PDSCH#3 and a PDSCH#4, and the PDSCH#3 and the PDSCH#4 are a unicast PDSCH and a multicast PDSCH, respectively; a gray filled part represents frequency-domain resources occupied by the PDSCH#3, and a slash filled part represents frequency-domain resources occupied by the PDSCH#4; and in particular, a gray diagonal filled part represents an intersection of frequency-domain resources occupied by the PDSCH#3 and frequency-domain resources occupied by the PDSCH#4.

In Embodiment 9, a number of frequency-domain resources occupied by the PDSCH#3 is C, a number of frequency-domain resources occupied by the PDSCH#4 is D, a number of frequency-domain resources in an intersection of the frequency-domain resources occupied by the PDSCH#3 and the frequency-domain resources occupied by the PDSCH#4 is E, and the total number of frequency-domain resources occupied by the plurality of PDSCHs is C+D-E; and the C, the D and the E are all positive integers.

### Embodiment 10

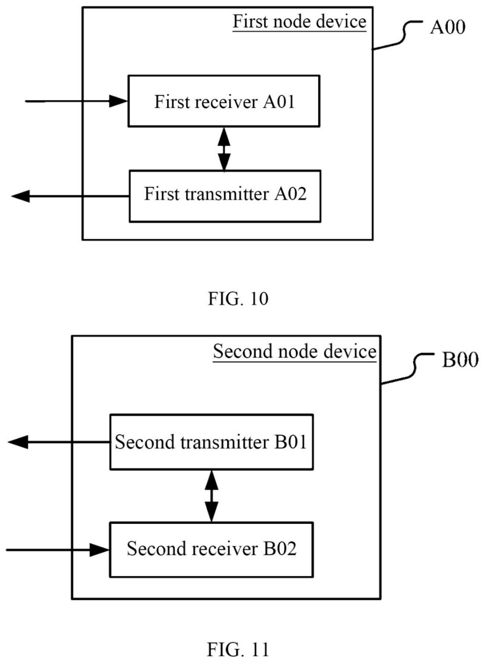

Embodiment 10 illustrates a structural block diagram of a processing device in a first node device, as shown in FIG. 10. In FIG. 10, the processing device of the first node device A00 comprises a first receiver A01 and a first transmitter A02.

As one embodiment, the first node device A00 is user equipment.

As one embodiment, the first node device A00 is a relay node.

As one embodiment, the first node device A00 is a vehicle-mounted communication device.

As one embodiment, the first node device A00 is conventional user equipment.

As one embodiment, the first node device A00 is RedCap UE.

As one embodiment, the first node device A00 is UE with UE capabilities between those of conventional UE and UE capabilities of RedCap UE.

As one embodiment, the first receiver A01 comprises at least one of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first five of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first four of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first three of an antenna 452, a receiving device 454, a multi-antenna receiving processor 458, a receiving processor 456, a controller/processor 459, a memory 460, and a data source 467 in FIG. 4 of the present application.

As one embodiment, the first receiver A01 comprises at least the first two of an antenna 452, a receiving device 454, a multi-antenna receiving processor 458, a receiving processor 456, a controller/processor 459, a memory 460, and a data source 467 in FIG. 4 of the present application.

As one embodiment, the first transmitter A02 comprises at least one of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter A02 comprises at least the first five of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter A02 comprises at least the first four of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter A02 comprises at least the first three of an antenna 452, a transmitting device 454, a multi-antenna transmitting device processor 457, a transmitting processor 468, a controller/processor 459, a memory 460, and a data source 467 in FIG. 4 of the present application.

As one embodiment, the first transmitter A02 comprises at least the first two of an antenna 452, a transmitting device 454, a multi-antenna transmitting device processor 457, a transmitting processor 468, a controller/processor 459, a memory 460, and a data source 467 in FIG. 4 of the present application.

As one embodiment, the first receiver A01 receives a plurality of pieces of signaling; and the first receiver A01 receives and decodes a plurality of PDSCHs, the plurality of pieces of signaling respectively scheduling the plurality of PDSCHs, and the plurality of PDSCHs comprising a unicast PDSCH and a multicast PDSCH, wherein whether a total number of frequency-domain resources occupied by the plurality of PDSCHs can be greater than a first upper limit is related to whether the plurality of PDSCHs are overlapped in a time domain, and the first upper limit is a positive integer greater than 1.

As one embodiment, when the plurality of PDSCHs are overlapped in a time domain, the total number of frequency-domain resources occupied by the plurality of PDSCHs cannot be greater than the first upper limit.

As one embodiment, when the plurality of PDSCHs are not overlapped in a time domain, the total number of frequency-domain resources occupied by the plurality of PDSCHs can be greater than the first upper limit.

As one embodiment, the first upper limit is equal to a maximum number of PRBs that may be occupied by one unicast PDSCH.

As one embodiment, the first upper limit is equal to a maximum number of PRBs that may be occupied by one multicast PDSCH.

As one embodiment, the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

As one embodiment, the plurality of PDSCHs are 2 PDSCHs.

As one embodiment, the first node is RedCap UE.

As one embodiment, when the plurality of PDSCHs are overlapped in a time domain, the plurality of PDSCHs are not overlapped in a frequency domain.

As one embodiment, the first transmitter A02 sends a plurality of HARQ-ACK bits, wherein the plurality of HARQ-ACK bits comprise at least one HARQ-ACK bit generated for each PDSCH among the plurality of PDSCHs.

As one embodiment, the first receiver A01 receives a plurality of pieces of signaling; and the first receiver A01 receives and decodes a plurality of PDSCHs, the plurality of pieces of signaling respectively scheduling the plurality of PDSCHs, and the plurality of PDSCHs comprising a unicast PDSCH and a multicast PDSCH, wherein whether a total number of frequency-domain resources occupied by the plurality of PDSCHs can be greater than a first upper limit is related to whether the plurality of PDSCHs are overlapped in a time domain, and the first upper limit is a positive integer greater than 1; when the plurality of PDSCHs are overlapped in the time domain, the total number of frequency-domain resources occupied by the plurality of PDSCHs cannot be greater than the first upper limit; the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

As one sub-embodiment of the above embodiment, the first node is RedCap UE, and the first upper limit is equal to a maximum number of PRBs that may be occupied by one unicast/multicast PDSCH.

As one sub-embodiment of the above embodiment, when the plurality of PDSCHs are not overlapped in a time domain, the total number of frequency-domain resources occupied by the plurality of PDSCHs can be greater than the first upper limit.

As one sub-embodiment of the above embodiment, the first upper limit is equal to 25 or 12.

As one embodiment, the first receiver A01 receives a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH, wherein whether the first node needs to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

As one embodiment, when the total number of frequency-domain resources occupied by the plurality of PDSCHs is greater than the first upper limit, the first node does not need to process the first PDSCH.

As one embodiment, when the total number of frequency-domain resources occupied by the plurality of PDSCHs is not greater than the first upper limit, the first node processes the first PDSCH.

As one embodiment, a second PDSCH is a PDSCH that is other than the first PDSCH in the plurality of PDSCHs and has a communication mode different from a communication mode of the first PDSCH, and the first node processes the second PDSCH.

As one embodiment, the first upper limit is equal to a maximum number of PRBs that may be occupied by one unicast PDSCH.

As one embodiment, the first upper limit is equal to a maximum number of PRBs that may be occupied by one multicast PDSCH.

As one embodiment, the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

As one embodiment, the plurality of PDSCHs are 2 PDSCHs.

As one embodiment, the first node is RedCap UE.

As one embodiment, the plurality of PDSCHs are not overlapped in a frequency domain.

As one embodiment, the first transmitter A02 sends at least one HARQ-ACK bit, wherein the at least one HARQ-ACK bit comprises an HARQ-ACK bit generated for at least one PDSCH among the plurality of PDSCHs.

As one embodiment, the first receiver A01 receives a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH, wherein whether the first node needs to process a first PDSCH is related to whether the total number of frequency-domain resources occupied by the plurality of PDSCHs is greater than a first upper limit, the first PDSCH is one of the plurality of PDSCHs, and the first upper limit is a positive integer greater than 1; when the total number of frequency-domain resources occupied by the plurality of PDSCHs is greater than the first upper limit, the first node does not need to process the first PDSCH; the plurality of PDSCHs are not overlapped in a frequency domain; and the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

As one sub-embodiment of the above embodiment, the first node is RedCap UE, and the first upper limit is equal to a maximum number of PRBs that may be occupied by one unicast/multicast PDSCH.

As one sub-embodiment of the above embodiment, when the total number of frequency-domain resources occupied by the plurality of PDSCHs is not greater than the first upper limit, the first node needs to process the first PDSCH.

As one sub-embodiment of the above embodiment, the first upper limit is equal to 25 or 12.

As one embodiment, the first receiver A01 receives a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH, wherein whether the first node needs to process a first PDSCH is related to whether the total number of frequency-domain resources occupied by the plurality of PDSCHs is greater than a first upper limit, the first PDSCH is one of the plurality of PDSCHs, and the first upper limit is a positive integer greater than 1; when the total number of frequency-domain resources occupied by the plurality of PDSCHs is not greater than the first upper limit, the first node needs to process the first PDSCH; the plurality of PDSCHs are not overlapped in a frequency domain; and the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

As one sub-embodiment of the above embodiment, the first node is RedCap UE, and the first upper limit is equal to a maximum number of PRBs that may be occupied by one unicast/multicast PDSCH.

As one sub-embodiment of the above embodiment, when the total number of frequency-domain resources occupied by the plurality of PDSCHs is greater than the first upper limit, the first node does not need to process the first PDSCH.

As one sub-embodiment of the above embodiment, the first upper limit is equal to 25 or 12.

### Embodiment 11

Embodiment 11 illustrates a structural block diagram of a processing device in a second node device, as shown in FIG. 11. In FIG. 11, the processing device of the second node device B00 comprises a second transmitter B01 and a second receiver B02.

As one embodiment, the second node device B00 is a base station.

As one embodiment, the second node device B00 is a satellite device.

As one embodiment, the second node device B00 is a relay node.

As one embodiment, the second node device B00 is a base station supporting RedCap UE.

As one embodiment, the second node device B00 is a base station supporting a multicast transmission mode.

As one embodiment, the second node device B00 is one of a test device, test equipment, and a test instrument.

As one embodiment, the second transmitter BO1 comprises at least one of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first five of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first four of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first three of an antenna 420, a transmitting device 418, a multi-antenna transmitting processor 471, a transmitting processor 416, a controller/processor 475, and a memory 476 in FIG. 4 of the present application.

As one embodiment, the second transmitter B01 comprises at least the first two of an antenna 420, a transmitting device 418, a multi-antenna transmitting processor 471, a transmitting processor 416, a controller/processor 475, and a memory 476 in FIG. 4 of the present application.

As one embodiment, the second receiver B02 comprises at least one of an antenna 420, a receiving device 418, a multi-antenna receiving processor 472, a receiving processor 470, a controller/processor 475, and a memory 476 in FIG. 4 of the present application.

As one embodiment, the second receiver B02 comprises at least the first five of an antenna 420, a receiving device 418, a multi-antenna receiving processor 472, a receiving processor 470, a controller/processor 475, and a memory 476 in FIG. 4 of the present application.

As one embodiment, the second receiver B02 comprises at least the first four of an antenna 420, a receiving device 418, a multi-antenna receiving processor 472, a receiving processor 470, a controller/processor 475, and a memory 476 in FIG. 4 of the present application.

As one embodiment, the second receiver B02 comprises at least the first three of an antenna 420, a receiving device 418, a multi-antenna receiving processor 472, a receiving processor 470, a controller/processor 475, and a memory 476 in FIG. 4 of the present application.

As one embodiment, the second receiver B02 comprises at least the first two of an antenna 420, a receiving device 418, a multi-antenna receiving processor 472, a receiving processor 470, a controller/processor 475, and a memory 476 in FIG. 4 of the present application.

As one embodiment, the second transmitter B01 sends a plurality of pieces of signaling; and the second transmitter B01 sends a plurality of PDSCHs, the plurality of pieces of signaling respectively scheduling the plurality of PDSCHs, and the plurality of PDSCHs comprising a unicast PDSCH and a multicast PDSCH, wherein whether a total number of frequency-domain resources occupied by the plurality of PDSCHs can be greater than a first upper limit is related to whether the plurality of PDSCHs are overlapped in a time domain, and the first upper limit is a positive integer greater than 1.

As one embodiment, when the plurality of PDSCHs are overlapped in a time domain, the total number of frequency-domain resources occupied by the plurality of PDSCHs cannot be greater than the first upper limit.

As one embodiment, when the plurality of PDSCHs are not overlapped in a time domain, the total number of frequency-domain resources occupied by the plurality of PDSCHs can be greater than the first upper limit.

As one embodiment, the first upper limit is equal to a maximum number of PRBs that may be occupied by one unicast PDSCH.

As one embodiment, the first upper limit is equal to a maximum number of PRBs that may be occupied by one multicast PDSCH.

As one embodiment, the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

As one embodiment, the plurality of PDSCHs are 2 PDSCHs.

As one embodiment, the plurality of PDSCHs are not overlapped in a frequency domain.

As one embodiment, the second receiver B02 receives a plurality of HARQ-ACK bits, wherein the plurality of HARQ-ACK bits comprise at least one HARQ-ACK bit generated for each PDSCH among the plurality of PDSCHs.

As one embodiment, the second transmitter B01 sends a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH, wherein whether receiving ends of the plurality of pieces of signaling need to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

As one embodiment, when the total number of frequency-domain resources occupied by the plurality of PDSCHs is greater than the first upper limit, the receiving ends of the plurality of pieces of signaling do not need to process the first PDSCH.

As one embodiment, when the total number of frequency-domain resources occupied by the plurality of PDSCHs is not greater than the first upper limit, the receiving ends of the plurality of pieces of signaling process the first PDSCH.

As one embodiment, a second PDSCH is a PDSCH that is other than the first PDSCH in the plurality of PDSCHs and has a communication mode different from a communication mode of the first PDSCH, and the receiving ends of the plurality of pieces of signaling process the second PDSCH.

As one embodiment, the first upper limit is equal to a maximum number of PRBs that may be occupied by one unicast PDSCH.

As one embodiment, the first upper limit is equal to a maximum number of PRBs that may be occupied by one multicast PDSCH.

As one embodiment, the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

As one embodiment, the plurality of PDSCHs are 2 PDSCHs.

As one embodiment, the plurality of PDSCHs are not overlapped in a frequency domain.

As one embodiment, the second receiver B02 receives at least one HARQ-ACK bit, wherein the at least one HARQ-ACK bit comprises an HARQ-ACK bit generated for at least one PDSCH among the plurality of PDSCHs.

Those of ordinary skill in the art can understand that all or parts of the steps in the above method can be completed by instructing relevant hardware through a program, and the program can be stored in a computer-readable storage medium, such as a read-only memory, a hard disk or an optical disk. Optionally, all or parts of the steps in the above embodiments can also be implemented using one or more integrated circuits. Accordingly, each module unit in the above embodiments can be implemented in the form of hardware or in the form of a software function module. The present application is not limited to any specific form of software and hardware combinations. The first node device in the present application comprises but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircrafts and other wireless communication devices. The second node device in the present application comprises but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircrafts and other wireless communication devices. The user equipment or UE or terminal in the present application comprises but is not limited to mobile phones, tablet computers, notebook computers, network access cards, low-power-consumption devices, eMTC devices, NB-IoT devices, vehicle-mounted communication devices, aircrafts, airplanes, drones, remote-controlled aircrafts and other wireless communication devices. The base station device or base station or network-side device in the present application comprises but is not limited to macrocellular base stations, microcell base stations, femtocells, relay base stations, eNBs, gNBs, transmitter receiver points (TRPs), GNSS, relay satellites, satellite base stations, air base stations, test devices, test equipment, test instruments and other devices.

Those skilled in the art should understand that the present invention can be implemented in other specified forms without departing from its core or basic features. Therefore, the embodiments disclosed at present should be regarded as descriptive rather than restrictive in any way. The scope of the present invention is determined by the appended claims rather than the foregoing description, and all modifications within their equivalent meanings and areas are considered to be comprised therein.

## Claims

1. A first node for wireless communication, comprising:
a first receiver receiving a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH,
wherein whether the first node needs to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

2. The first node according to claim 1, wherein when the total number of frequency-domain resources occupied by the plurality of PDSCHs is greater than the first upper limit, the first node does not need to process the first PDSCH.

3. The first node according to claim 1 or 2, wherein when the total number of frequency-domain resources occupied by the plurality of PDSCHs is not greater than the first upper limit, the first node processes the first PDSCH.

4. The first node according to any one of claims 1 to 3, wherein a second PDSCH is a PDSCH other than the first PDSCH in the plurality of PDSCHs, and the first node processes the second PDSCH.

5. The first node according to any one of claims 1 to 4, wherein the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

6. The first node according to any one of claims 1 to 5, wherein the plurality of pieces of signaling are 2 pieces of signaling, the plurality of PDSCHs are 2 PDSCHs, the first node is RedCap UE, and the plurality of PDSCHs are not overlapped in a frequency domain.

7. The first node according to any one of claims 1 to 6, wherein a behavior of processing the first PDSCH comprises: decoding the first PDSCH.

8. The first node according to any one of claims 1 to 7, wherein an expression of needing to process the first PDSCH comprises: shall be able to decode the first PDSCH.

9. The first node according to any one of claims 1 to 8, wherein the frequency-domain resources occupied by the plurality of PDSCHs are counted in accordance with RBs/PRBs, and the first upper limit is 25.

10. The first node according to any one of claims 1 to 8, wherein the frequency-domain resources occupied by the plurality of PDSCHs are counted in accordance with RBs/PRBs, and the first upper limit is 12.

11. A second node for wireless communication, comprising:
a second transmitter sending a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH,
wherein whether receiving ends of the plurality of pieces of signaling need to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

12. The second node according to claim 11, wherein when the total number of frequency-domain resources occupied by the plurality of PDSCHs is greater than the first upper limit, the receiving ends of the plurality of pieces of signaling do not need to process the first PDSCH.

13. The second node according to claim 11 or 12, wherein when the total number of frequency-domain resources occupied by the plurality of PDSCHs is not greater than the first upper limit, the receiving ends of the plurality of pieces of signaling process the first PDSCH.

14. The second node according to any one of claims 11 to 13, wherein the plurality of PDSCHs are not overlapped in a frequency domain.

15. The second node according to any one of claims 11 to 14, wherein the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

16. The second node according to any one of claims 11 to 15, wherein the plurality of pieces of signaling are 2 pieces of signaling, and the plurality of PDSCHs are 2 PDSCHs.

17. The second node according to any one of claims 11 to 16, wherein a behavior of processing the first PDSCH comprises: decoding the first PDSCH.

18. The second node according to any one of claims 11 to 17, wherein an expression of needing to process the first PDSCH comprises: shall be able to decode the first PDSCH.

19. The second node according to any one of claims 11 to 18, wherein the frequency-domain resources occupied by the plurality of PDSCHs are counted in accordance with RBs/PRBs, and the first upper limit is 25.

20. The second node according to any one of claims 11 to 18, wherein the frequency-domain resources occupied by the plurality of PDSCHs are counted in accordance with RBs/PRBs, and the first upper limit is 12.

21. A method used in a first node for wireless communication, comprising:
receiving a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH,
wherein whether the first node needs to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

22. The method used in a first node according to claim 21, wherein when the total number of frequency-domain resources occupied by the plurality of PDSCHs is greater than the first upper limit, the first node does not need to process the first PDSCH.

23. The method used in a first node according to claim 21 or 22, wherein when the total number of frequency-domain resources occupied by the plurality of PDSCHs is not greater than the first upper limit, the first node processes the first PDSCH.

24. The method used in a first node according to any one of claims 21 to 23, wherein a second PDSCH is a PDSCH other than the first PDSCH in the plurality of PDSCHs, and the first node processes the second PDSCH.

25. The method used in a first node according to any one of claims 21 to 24, wherein the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

26. The method used in a first node according to any one of claims 21 to 25, wherein the plurality of pieces of signaling are 2 pieces of signaling, the plurality of PDSCHs are 2 PDSCHs, the first node is RedCap UE, and the plurality of PDSCHs are not overlapped in a frequency domain.

27. The method used in a first node according to any one of claims 21 to 26, wherein a behavior of processing the first PDSCH comprises: decoding the first PDSCH.

28. The method used in a first node according to any one of claims 21 to 27, wherein an expression of needing to process the first PDSCH comprises: shall be able to decode the first PDSCH.

29. The method used in a first node according to any one of claims 21 to 28, wherein the frequency-domain resources occupied by the plurality of PDSCHs are counted in accordance with RBs/PRBs, and the first upper limit is 25.

30. The method used in a first node according to any one of claims 21 to 28, wherein the frequency-domain resources occupied by the plurality of PDSCHs are counted in accordance with RBs/PRBs, and the first upper limit is 12.

31. A method used in a second node for wireless communication, comprising:
sending a plurality of pieces of signaling, the plurality of pieces of signaling respectively scheduling a plurality of PDSCHs, the plurality of PDSCHs being overlapped in a time domain, and the plurality of PDSCHs comprising a unicast PDSCH and a multicast PDSCH,
wherein whether receiving ends of the plurality of pieces of signaling need to process a first PDSCH is related to whether a total number of frequency-domain resources occupied by the plurality of PDSCHs is greater than a first upper limit, the first PDSCH is one of the plurality of PDSCHs, and the first upper limit is a positive integer greater than 1.

32. The method used in a second node according to claim 31, wherein when the total number of frequency-domain resources occupied by the plurality of PDSCHs is greater than the first upper limit, the receiving ends of the plurality of pieces of signaling do not need to process the first PDSCH.

33. The method used in a second node according to claim 31 or 32, wherein when the total number of frequency-domain resources occupied by the plurality of PDSCHs is not greater than the first upper limit, the receiving ends of the plurality of pieces of signaling process the first PDSCH.

34. The method used in a second node according to any one of claims 31 to 33, wherein the plurality of PDSCHs are not overlapped in a frequency domain.

35. The method used in a second node according to any one of claims 31 to 34, wherein the plurality of pieces of signaling are all in a DCI format; a CRC of one piece of signaling among the plurality of pieces of signaling is scrambled by a C-RNTI, and the one piece of signaling among the plurality of pieces of signaling is used for scheduling one unicast PDSCH in the plurality of PDSCHs; and a CRC of another piece of signaling among the plurality of pieces of signaling is scrambled by a G-RNTI, and the another piece of signaling among the plurality of pieces of signaling is used for scheduling one multicast PDSCH in the plurality of PDSCHs.

36. The method used in a second node according to any one of claims 31 to 35, wherein the plurality of pieces of signaling are 2 pieces of signaling, and the plurality of PDSCHs are 2 PDSCHs.

37. The method used in a second node according to any one of claims 31 to 36, wherein a behavior of processing the first PDSCH comprises: decoding the first PDSCH.

38. The method used in a second node according to any one of claims 31 to 37, wherein an expression of needing to process the first PDSCH comprises: shall be able to decode the first PDSCH.

39. The method used in a second node according to any one of claims 31 to 38, wherein the frequency-domain resources occupied by the plurality of PDSCHs are counted in accordance with RBs/PRBs, and the first upper limit is 25.

40. The method used in a second node according to any one of claims 31 to 38, wherein the frequency-domain resources occupied by the plurality of PDSCHs are counted in accordance with RBs/PRBs, and the first upper limit is 12.
